# EUROPEAN PATENT APPLICATION

(11) **EP 4 604 594 A1**
(43) Date of publication of application: **20.08.2025**
(21) Application number: 25152846.9
(22) Date of filing: 20.01.2025
(51) Int. Cl.: H04W 16/18, H04W 24/02

(54) **APPARATUSES, COMPUTER-IMPLEMENTED METHODS, AND COMPUTER PROGRAM PRODUCTS FOR VEHICLE-BASED SIGNAL STRENGTH PROCESSING AND VISUALIZATION**

(30) Priority: 13.02.2024 IN 202411009688; 03.04.2024 US 202418625564
(71) Applicant: Honeywell International Inc., Charlotte, NC 28202 (US)
(72) Inventor: KOTHANDARAMAN, Deena Dayalan, Charlotte, 28202 (US); CHIVUKULA, Rajesh, Charlotte, 28202 (US); GURUSAMY, Saravanakumar, Charlotte, 28202 (US); CHANDRASEKHARA PANICKER, Renju, Charlotte, 28202 (US)
(74) Representative: Haseltine Lake Kempner LLP

(57) **Abstract**

Embodiments of the present disclosure generate a model of signal strengths in an environment and provide visualization of data associated therewith, for example signal strengths. Some embodiments receive one or more portions of data, such as entity parameter data corresponding to at least one signal handling entity and dynamic environment data associated with an impact of a signal strength of at least one signal type, generate a model of signal strengths in an environment based at least in part on such data, identify a set of coverage areas, and output one or more coverage maps based at least in part on the model. The coverage maps may include a top-down coverage map and a vertical profile coverage map.

## Description

### CROSS-REFERENCE TO RELATED APPLICATION

The present application claims priority to India Provisional Patent Application Serial No. 202411009688, filed February 13, 2024, which is hereby incorporated by reference in its entirety.

### TECHNICAL FIELD

Embodiments of the present disclosure generally relate to signal strength determination and use for any number of communications networks, and specifically to determining signal strengths of signal types in an environment for use in enabling uninterrupted communication by vehicles operating within the environment.

### BACKGROUND

Reliable communications between devices are desired in various contexts. Communications networks suffer from various deficiencies in stability throughout an environment such that one or more portions of an environment may suffer from diminishments in strength for a particular communications network. Such diminishments in strength for a particular communications network and/or losses in connectivity due to diminished signal strength may pose a risk to any of a myriad of operations that utilize network communications for and are performed within such an environment.

Applicant has discovered problems with current implementations of signal strength determination and use. Through applied effort, ingenuity, and innovation, Applicant has solved many of these identified problems by developing embodied in the present disclosure, which are described in detail below.

### BRIEF SUMMARY

In one aspect, a computer-implemented method includes receiving entity parameter data corresponding to at least one signal handling entity associated with an environment, where the at least one signal handling entity supports communication of at least one signal type. The computer-implemented method also includes receiving dynamic environment data associated with an impact of a signal strength of the signal type in the environment. The computer-implemented method also includes generating a model of signal strength in an environment for the at least one signal type by at least modeling a signal propagation for each signal handling entity of the at least one signal handling entity based at least in part on the entity parameter data and the dynamic environment data, determining the signal strength for the at least one signal type in the environment based at least in part on a combination of the signal propagations for the at least one signal handling entity, identifying a set of coverage areas within the environment that are associated with different signal strengths based at least in part on the model, outputting a top-down coverage map of the set of coverage areas at least within proximity of a vehicle, and outputting a vertical profile coverage map of the set of coverage areas at least within the proximity of the vehicle.

The computer-implemented method may also include where the model of signal strengths includes a modeled connectivity signal strength and a modeled position accuracy signal strength.

The computer-implemented method may further include receiving an updated proposed travel plan that navigates throughout the environment, and updating at least one user interface includes the top-down coverage map and the vertical profile coverage map to depict at least one updated signal strength associated with the vehicle along the updated proposed travel plan.

The computer-implemented method may further include receiving at least one signal interface parameter indicating a particular signal type, a provider identifier, or another parameter associated with the signal strengths associated with the set of coverage areas, determining an updated set of coverage areas based at least in part on the at least one signal interface parameter, and outputting a coverage map to a display, where the coverage map depicts the updated set of coverage areas.

The computer-implemented method may also include where the model of a first signal type is based at least in part on a first set of type-specific modeling parameters and the model of a second signal type is based at least in part on a second set of type-specific modeling parameters.

The computer-implemented method may further include generating a flight plan based at least in part on the set of coverage areas.

The computer-implemented method may also include where the top-down coverage map and the vertical profile coverage map are outputted to a display of an external vehicle control system associated with the vehicle.

The computer-implemented method may also include where the entity parameter data includes one or more from a set of entity location data, entity coverage data, entity system data, environment map data, environment structure data, and obstacle data.

The computer-implemented method may also include where the top-down coverage map and the vertical profile coverage map are outputted to a display onboard the vehicle.

The computer-implemented method may also include where the top-down coverage map or the vertical profile coverage map visually distinguishes a dead zone area in the set of coverage areas.

The computer-implemented method may further include determining, based at least in part on the set of coverage areas, an optimal network utilized for data communication. Other technical features may be readily apparent to one skilled in the art from the following figures, descriptions, and claims.

The computer-implemented method may further include causing the vehicle to connect to the optimal network.

In accordance with another aspect, an apparatus is provided. The apparatus includes at least one processor and at least one memory having computer-coded instructions stored thereon that, in execution with the at least one processor, causes the apparatus to perform any one of the example computer-implemented methods described herein.

In accordance with another aspect, a computer program product is provided. The computer program product includes at least one non-transitory computer-readable storage medium having computer program code stored thereon that, in execution with at least one processor, is configured to perform any one of the example computer-implemented methods described herein.

Other technical features may be readily apparent to one skilled in the art from the following figures, descriptions, and claims.

### BRIEF DESCRIPTION OF THE SEVERAL VIEWS OF THE DRAWINGS

To easily identify the discussion of any particular element or act, the most significant digit or digits in a reference number refer to the figure number in which that element is first introduced.
FIG. 1 illustrates an example system that may be specially configured within which embodiments of the present disclosure may operate.
FIG. 2 illustrates a block diagram of an example apparatus that may be specially configured in accordance with at least one example embodiment of the present disclosure.
FIG. 3 illustrates an example data flow between components of an example system in accordance with at least one example embodiment of the present disclosure.
FIG. 4 illustrates a visualization of an example data architecture in accordance with at least one example embodiment of the present disclosure.
FIG. 5 illustrates a data flow for modeling signal strengths in accordance with at least one example embodiment of the present disclosure.
FIG. 6 illustrates an example user interface depicting signal strengths along a travel path of a vehicle in accordance with at least one example embodiment of the present disclosure.
FIG. 7 illustrates an example user interface including a top-down coverage map and vertical profile coverage map in accordance with at least one example embodiment of the present disclosure.
FIG. 8 illustrates a flowchart including example operations of a process for outputting modeled signal strengths via a user interface in accordance with at least one example embodiment of the present disclosure.
FIG. 9 illustrates a flowchart including example operations of a process for outputting a coverage map based at least in part on a signal interface parameter in accordance with at least one example embodiment of the present disclosure.
FIG. 10 illustrates a flowchart including example operations of a process for selecting an optimal network in accordance with at least one example embodiment of the present disclosure.
FIG. 11 illustrates a flowchart including example operations of a process for depicting an updated proposed travel plan in accordance with at least one example embodiment of the present disclosure.

### DETAILED DESCRIPTION

Various embodiments of the present disclosure are described more fully hereinafter with reference to the accompanying drawings, in which some, but not all embodiments of the present disclosure are shown. Indeed, the present disclosure may be embodied in many different forms and should not be construed as limited to the embodiments set forth herein; rather, these embodiments are provided so that this disclosure will satisfy applicable legal requirements. The term "or" is used herein in both the alternative and conjunctive sense, unless otherwise indicated. The terms "illustrative" and "example" are used to be examples with no indication of quality level. Terms such as "computing," "determining," "generating," and/or similar words are used herein interchangeably to refer to the creation, modification, or identification of data. Further, "based on," "based at least in part on," "based at least on," "based upon," and/or similar words are used herein interchangeably in an open-ended manner such that they do not necessarily indicate being based only on or based solely on the referenced element or elements unless so indicated. Like numbers refer to like elements throughout. Moreover, while certain embodiments of the present disclosure are described with reference to predictive data analysis, one of ordinary skill in the art will recognize that the disclosed concepts may be used to perform other types of data analysis.

### OVERVIEW

In various contexts, devices rely on data transmissions via one or more communications networks accessible in an environment. In one such example context, vehicles operating in a particular environment may utilize particular communications networks to transmit data associated with operation of the vehicle and/or to receive data affecting operation of the vehicle. Such data communications may be particularly important in certain contexts, for example in operation of advanced air mobility vehicles controlled remotely or otherwise monitored remotely. In some such contexts, continuous connectivity to one or more remote systems (e.g., ground systems) via at least one communications network in an environment may be a parameter of nominal operation of said vehicle, where violation of said parameter may indicate non-nominal operation and/or result in mission failure. At any given time, however, a vehicle may traverse across different positions across any number of environments, where each position may be associated with a different quality of connection via a particular communications network. In this regard, it may be desirable or regulated to have a vehicle operate to ensure continuous connectivity via at least one communications network as the vehicle navigates throughout one or more environments.

Accurately predicting the quality of a connection of a vehicle via one or more communications networks at various positions in the environment remains difficult. For example, at a given time and at a particular position of an environment, a signal strength of a particular signal type and for a particular communications network may be affected by the underlying hardware responsible for receiving and/or transmitting signals, environment terrain, buildings in the environment, obstacles in the environment, weather conditions, and any of a myriad of other factors both external and internal to the systems performing the data communications. Furthermore, positions in certain contexts, such as in aerial vehicle communications, must consider a vertical dimension in addition to an X-Y planar direction, such that predictions across a two-dimensional plane may be insufficient. In this regard, a methodology for improved determination of signal strengths at various positions throughout an environment is desired to ensure accuracy in navigating throughout the environment in a manner that remains connected to at least one communications network.

Embodiments of the present disclosure provide for accurate modeling of signal strengths at various positions throughout an environment. In this regard, such embodiments model the signal strength of a particular signal type for a particular communications network at various positions in an environment to establish coverage areas having different levels of connectivity. Such coverage areas may be associated with different signal strengths, for example defining coverage areas with no signal strength, coverage areas with weak signal strength, coverage areas with good signal strength, and other coverage areas with strong signal strengths. The modeling may be performed based at least in part on a combination of particular data from any number of data sources, for example entity parameter data and dynamic environment data. In this regard, any number of different signal strengths corresponding to distinct signal types and/or communications networks may be generated within the same model. The resulting model may thus accurately represent which communications networks, if any, are available to access by a vehicle at different positions in the environment.

Embodiments of the present disclosure further provide for determining coverage areas in the environment across multiple dimensions. In this regard, some embodiments model signal strengths at positions across both a horizontal plane as well as a vertical plane, such that a signal strength at any position in the environment may be determined. Based on such multi-dimensional modeling, signal strength of connectivity for a vehicle moving across any such dimension (e.g., an aerial vehicle that may move both laterally and vertically) may be accurately determined.

Embodiments of the present disclosure further provide for improved user interfaces depicting the modeled signal strength. Some embodiments enable outputting of one or more coverage maps that depict a set of coverage areas, each representing signal strengths at particular positions in the environment. Such coverage areas may be depicted across multiple dimensions, for example to include both top-down coverage maps and vertical profile coverage maps. The depicted coverage maps in one or more dimensions may be utilized to ensure that a vehicle remains in positions associated with any signal strength or sufficient signal strength to enable communication of data at any such positions. Additionally, in some embodiments the coverage map or coverage maps may be outputted to a user interface together with a representation of a travel plan or other data indicating planned movement of a vehicle throughout the environment to indicate a signal strength that will be available to the vehicle at any of a myriad of positions as it travels along the planned path (e.g., a flight plan for the vehicle).

Additionally or alternatively still, some embodiments further provide for communications network analysis and/or optimization based at least in part on the modeled data. For example, in some embodiments, a user interface including one or more coverage maps enables determination of whether a vehicle will have continuous access to a particular communications network. The particular communications network may be operated by or otherwise facilitated by a particular entity embodying a communications network provider and/or be associated with a particular signal type. Additionally or alternatively, in some embodiments a user interface including one or more coverage maps enables determination of changes in communications networks to be performed by a vehicle along a travel path (e.g., a flight plan) to ensure continuous connectivity to at least one such communications network as the vehicle travels. Further still, in some embodiments a user interface including one or more coverage maps enables determination of an optimal network at one or more positions in an environment, where the optimal network may be utilized to minimize resource consumption utilized in performing communications via a communications network while ensuring that the vehicle remains continuously connected to at least one communications network during traversal. In some embodiments, the optimal network corresponds to a determined minimization of consumption of energy, computing power, costs, or other resources utilized to communicate data across a network.

For at least the above reasons, embodiments of the present disclosure provide various technical improvements to various technical fields and address various technical problems in various technical fields. For example, some embodiments (i) utilize particular data (e.g., entity parameter data and/or dynamic environment data) to accurately perform modeling of signal strength data, (ii) perform modeling with improved accuracy in a multi-dimensional space, (iii) provide improved user interfaces for depicting signal strengths across an environment, (iv) enable use of signal strengths to update travel plan information associated with a particular vehicle (e.g., update a flight plan in a manner that remains in continuous connectivity with at least one communications network), and/or (v) enable accurate determinations of an optimal network at one or more positions in an environment. It should be appreciated that embodiments of the present disclosure may provide one of such technical improvements, al such technical improvements, or any combination thereof. Additionally, such technical improvements are provided in addition to various user and business advantages associated with modeling signal strengths in the manner described.

### DEFINITIONS

"Communications network" refers to one or more systems embodied in hardware, software, firmware, and/or any combination thereof, that facilitates transmission of data between separate computing devices.

"Coverage area" refers to electronically managed data representing a signal strength, level of signal strength, or range of signal strengths in a particular geographic area defining an environment or a portion of an environment.

"Coverage map" refers to renderable data depicting at least one coverage area. in an environment.

"Dead zone area" refers to an environment or portion of an environment associated with no signal strength or a signal strength that is insufficient to send and/or receive data across a communications network.

"Dynamic environment data" refers to electronically managed data associated with dynamic impact to at least one signal strength within an environment.

"Entity parameter data" refers to electronically managed data that impacts operation of a signal handling entity for transmitting data signals and/or receiving data signals.

"Environment" refers to a physically defined geographic region within which at least one vehicle may operate.

"Impact" refers to an effect of an external object on a signal strength in an environment for at least one signal type.

"Model" refers to a digital representation of signal communications in a particular environment.

"Modeled connectivity signal strength" refers to electronically managed data representing a signal strength of a signal type associated with communication of any type of data across at least one communications network.

"Modeled position accuracy signal strength" refers to electronically managed data representing a signal strength of a signal type associated with communication of GPS data or other data utilized to determine a position of a vehicle within an environment.

"Optimal network" refers to a particular network selected to utilize for data transmission based at least in part on one or more determinations to minimize resources expenditure associated with the data transmission.

"Provider identifier" refers to electronically managed data that uniquely identifies an operator of a communications network supported by at least one signal handling entity

"Set" refers to one or more data structures that maintain any number of data objects in an ordered or unordered manner. A "set of [data objects]" and a "[data object] set" refers to a set particularly configured to store the specific type of data object as indicated, for example a "set of vehicles" defines a set configured to store data objects representing any number of vehicles.

"Signal handling entity" refers to a system embodied in hardware, software, firmware, and/or any combination thereof, that performs data communication through signal transmissions and/or signal reception for any number of signal types.

"Signal interface parameter" refers to electronically managed data indicating a parameter associated with signal strength in an environment that is utilized to configure a user interface to depict particular representations based at least in part on the parameter.

"Signal propagation" refers to digitally modeling a representation of signal strength at various positions throughout an environment.

"Signal strength" refers to a capacity for signal output and/or signal reception by a particular system.

"Signal type" refers to electronically managed data representing a defined frequency range for signals propagated throughout an environment.

"Top-down coverage map" refers to a coverage map that depicts signal strengths at different positions along an X-Y dimension of an environment.

"Type-specific modeling parameter" refers to electronically managed data that represents at least one particular parameter utilized to model signal strength of signals of a particular signal type in an environment.

"Updated proposed travel plan" refers to a travel plan updated based at least in part on signal strengths modeled in an environment.

"Vehicle" refers to any apparatus that traverses throughout an environment by any means of travel. A vehicle in some contexts transports goods, persons, objects, equipment, or may not transport any cargo. A vehicle in some contexts travels by means of air (including through space), sea, or land. Non-limiting examples of vehicles includes urban air mobility vehicles, drones, helicopters, fully autonomous air vehicles, semi-autonomous air vehicles, airplanes, orbital craft, spacecraft, boat, submarine, seaplane or other land-air apparatus, car, truck, autonomous automobile, and a land-sea apparatus.

"Vehicle control system" refers to hardware, software, firmware, and/or any combination thereof, that affects movement operation of a vehicle.

"Vertical profile coverage map" refers to a coverage map that depicts signal strengths at different positions along a vertical Z dimension of an environment.

### EXAMPLE SYSTEMS AND APPARATUSES OF THE DISCLOSURE

The methods, apparatuses, systems, and computer program products of the present disclosure may be embodied by any variety of devices. For example, a method, apparatus, system, and computer program product of an example embodiment may be embodied by a fixed computing device, such as a personal computer, computing server, computing workstation, or a combination thereof. Further, an example embodiment may be embodied by any of a variety of mobile terminals, mobile telephones, smartphones, laptop computers, tablet computers, or any combination of the aforementioned devices.

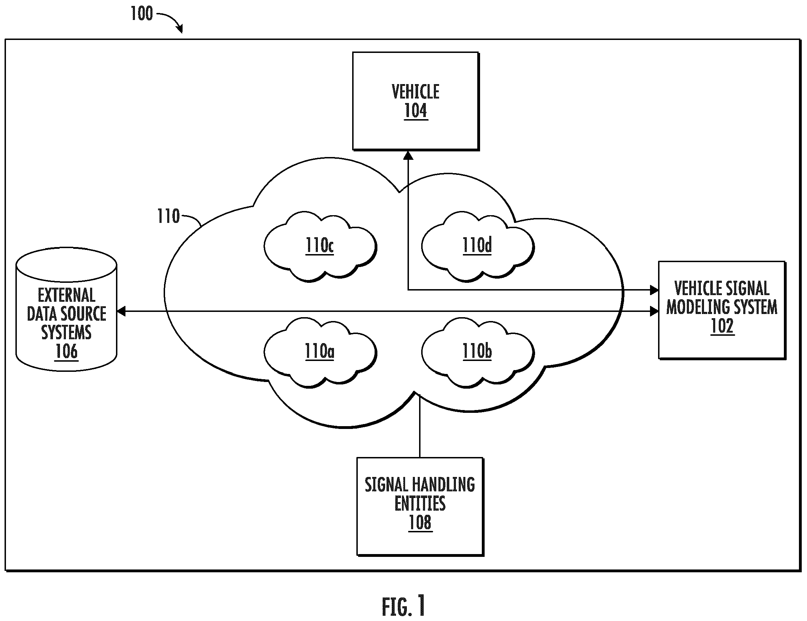

In this regard, FIG. 1 illustrates an example system that may be specially configured within which embodiments of the present disclosure may operate. Specifically, FIG. 1 illustrates an overview for a system 100 configured for vehicle signal modeling in accordance with the present disclosure. Specifically, the system 100 includes a vehicle signal modeling system 102, a vehicle 104, an external data source systems 106, and one or more signal handling entities 108. The vehicle signal modeling system 102, vehicle 104, and external data source systems 106 in some embodiments are communicable via one or more communications networks, such as any of the communications networks 110a-110d (collectively communications networks 110). In some embodiments, each of the communications networks 110a-1 10d is supported by one or more of the signal handling entities 108.

The system 100 includes vehicle signal modeling system 102. In some embodiments, the vehicle signal modeling system 102 includes at least one application server and/or database server. In some embodiments, the at least one server may be embodied in hardware, software, firmware, and/or any combination thereof, specially configured to provide the functionality described herein. Additionally or alternatively, in some embodiments, the at least one database server may be embodied in hardware, software, firmware, and/or a combination thereof, that provides data storage and/or retrieval functionality associated with the functionality described herein. For example, in some embodiments, the vehicle signal modeling system 102 is configured via hardware, software, firmware, and/or any combination thereof, that provides for data intake and/or collection, modeling of signal strengths in an environment, and/or outputting of at least one particular coverage map based at least in part on modeled data. The vehicle signal modeling system 102 may be comprised of a single computing device or a plurality of computing devices located locally and/or remotely from one another that cooperate with one another to provide the functions described herein.

In some embodiments, a database server is embodied as a data storage device, such as one or more local storage device(s), one or more cloud storage device(s), network attached storage ("NAS") device or a plurality of NAS devices, or as a separate database server of plurality of servers. The database server in some embodiments includes information accessed by, receive by, and/or otherwise generated and/or processed by the vehicle signal modeling system 102 to facilitate operations provided by vehicle signal modeling system 102 as depicted and/or described herein. For example, the database server may be configured to store, without limitation, a plurality of data records associated with one or more signal handling entities and/or an environment, for example and without limitation entity parameter data and/or dynamic environment data.

In some embodiments, the vehicle signal modeling system 102 includes one or more displays configured to enable rendering of at least one user interface. Additionally or alternatively, in some embodiments, the vehicle signal modeling system 102 embodies a backend system that causes rendering via one or more external devices, for example via one or more displays of said external systems. For example, in some embodiments, the vehicle signal modeling system 102 causes rendering of a user interface via one or more displays associated with or onboard the vehicle 104.

The vehicle 104 may be embodied by any of a number of apparatuses that navigate throughout an environment. Non-limiting examples of the vehicle 104 include an aerial vehicle, a ground vehicle, and a sea vehicle, for example an autonomous unmanned vehicle, urban mobility vehicle, and/or the like. In some embodiments, the vehicle includes one or more computing devices that facilitate execution of one or more subsystems or components that perform movement and/or traversal of the vehicle 104. In other embodiments, the vehicle is controlled entirely autonomously, entirely by a human pilot, or by a hybrid of semi-autonomous control. In some embodiments, the vehicle 104 includes at least one computing system embodied in hardware, software, firmware, and/or any combination thereof, that performs the one or more functions for controlling operation and/or monitoring operation of the vehicle 104.

In some embodiments, the vehicle 104 includes one or more sensors for monitoring particular data parameters associated with the environment surrounding the vehicle 104. In some embodiments, such data parameters represent particular portions of dynamic environment data. Non-limiting examples of such data parameters include camera data, LIDAR data, position data (e.g., GPS data), weather data, pressure data, accelerometer data, velocity data, and/or the like. Additionally or alternatively, in some embodiments, the vehicle 104 derives one or more data parameters embodying portions of dynamic environment data based at least in part on derivations from one or more computing systems onboard the vehicle 104.

In some embodiments, the vehicle 104 is associated with any number of other vehicles. The other vehicles in some embodiments embody other vehicles operating within the same fleet as the vehicle 104. Additionally or alternatively, in some embodiments, the other vehicles includes one or more other vehicles in the same fleet as the vehicle 104. Additionally or alternatively still, in some embodiments, the other vehicles includes one or more vehicles that are associated with travel plans that approach one another, intersect, or otherwise enter the same environments along the travel plan.

The external data source systems 106 includes any number of application servers, database severs, and/or the like embodied in hardware, software, firmware, and/or any combination thereof, that maintains, retrieves, generates, and/or otherwise provides data associated with one or more vehicles and/or environments. In some embodiments, the external data source systems 106 includes one or more systems that retrieves, stores, and/or aggregates vehicle data associated with a plurality of distinct vehicles. Additionally or alternatively, in some embodiments, the external data source systems 106 includes one or more systems that retrieves, stores, and/or aggregates environment data associated with an environment in which at least one vehicle may be operating, for example the vehicle 104. For example, in some embodiments, the external data source systems 106 includes a weather sensor, traffic sensor, RADAR, and/or other sensor positioned within an environment. In some embodiments, the external data source systems 106 is configured to store dynamic environment data and/or entity parameter data.

The signal handling entities 108 includes any number of computing systems embodied in hardware, software, firmware, and/or any combination thereof, that supports at least one communications network of the communications networks 110. In some embodiments, the signal handling entities 108 includes cell towers, radio frequency stations, satellites, and/or the like that include hardware, software, firmware, and/or any combination thereof, that communicates signals of one or more signal types. For example, each signal handling entity of the signal handling entities 108 in some embodiments includes one or more antennas, base transceivers, ground-based equipment, power sources, envelopes, masts, and/or the like that facilitates signal receiving and/or signal transmitting. The signals of a different signal types may correspond to different frequencies to facilitate communications of different transmission ranges, transfer speeds, and/or other communication properties. It will be appreciated that in some embodiments, distinct signal handling entities 108 include distinct components to facilitate communication of such distinct signal types. As illustrated, for example, communications networks 110 includes first network 110a, second network 1 10b, third network 1 10c, and fourth network 110d.

Each of the first network 1 10a, second network 110b, third network 110c, and fourth network 110d may be supported by a distinct signal handling entity, and/or a combination of signal handling entities, of the signal handling entities 108. For example, a first signal handling entity of the signal handling entities 108 may support a first network 110a supporting a first signal type (e.g., cellular communications) and a second signal handling entity of the signal handling entities 108 may support a second network 110b support a second signal type (e.g., satellite communications). Additionally or alternatively still, in some embodiments, two or more signal handling entities of the signal handling entities 108 support the same communications network, for example the communications networks 110. Additionally or alternatively still, in some embodiments, the signal handling entities 108 includes a first signal handling entity supporting communications network of a particular signal type for a first provider corresponding to a first provider identifier, and the signal handling entities 108 includes a second signal handling entity supporting a communications network of the particular signal type for a second provider corresponding to a second provider identifier. A vehicle in a particular environment, for example the vehicle 104 may have access to both such communications networks and/or any combination of multiple communications networks.

It will be appreciated that the distinct communications networks of the communications networks 110 may be associated with distinct signal strengths. For example, in some embodiments, the signal handling entities of the signal handling entities 108 supporting each distinct communications networks may have particular signal strength at a particular location in an environment based at least in part on the hardware, software, firmware, and/or combination thereof associated with each signal handling entity supporting such a communications network, the topology and/or other aspects of the environment itself, obstacles in the environment, and/or the like. Additionally or alternatively, in some embodiments, the signal strength of one or more communications networks is affected by other dynamic data within the environment, for example weather data, traffic data, and/or the like associated with a particular environment. It should be appreciated that, in this regard, each of the signal handling entities 108 may include or otherwise be associated with the same hardware, software, firmware, and/or any combination thereof, that supports different signal strengths of one or more signal types based at least in part on any one or more other parameters. Additionally or alternatively, in some embodiments, the signal handling entities 108 may support a plurality of communications networks of the communications networks 110 at the same location within the environment.

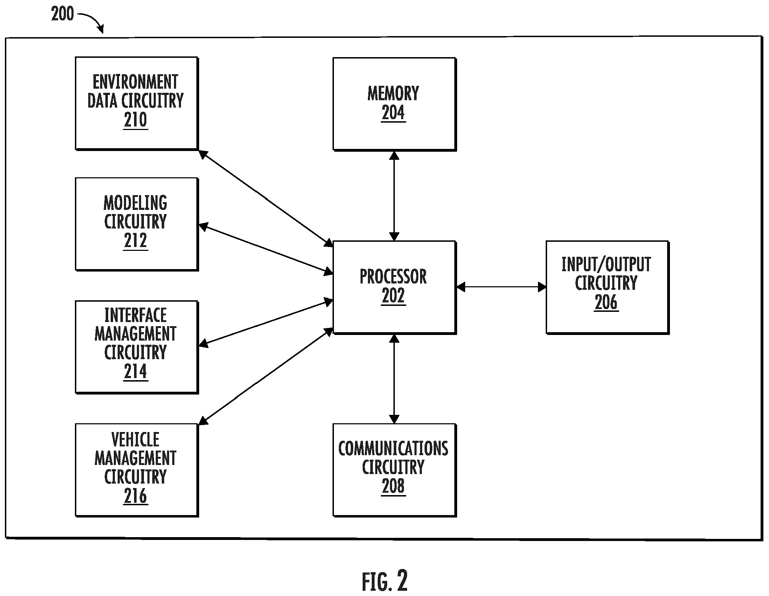

FIG. 2 illustrates a block diagram of an example apparatus that may be specially configured in accordance with at least one example embodiment of the present disclosure. Specifically, FIG. 2 depicts an example apparatus 200. In some embodiments, one or more systems of FIG. 1, for example the vehicle signal modeling system 102, is embodied by one or more computing systems, devices, and/or apparatuses, for example the apparatus 200 shown in FIG. 2. The apparatus 200 includes a processor 202, memory 204, input/output circuitry 206, communications circuitry 208, environment data circuitry 210, modeling circuitry 212, interface management circuitry 214, and vehicle management circuitry 216. The apparatus 200 may be configured, using one or more portions of the described sets of circuitry embodying the processor 202, memory 204, input/output circuitry 206, communications circuitry 208, environment data circuitry 210, modeling circuitry 212, interface management circuitry 214, and vehicle management circuitry 216, to execute the operations described herein.

Although the components are described with respect to functional limitations, it should be understood that the particular implementations necessarily include the use of particular hardware. It should also be understood that certain of the components described herein may include similar or common hardware. For example, two sets of circuitry defining the processor 202, memory 204, input/output circuitry 206, communications circuitry 208, environment data circuitry 210, modeling circuitry 212, interface management circuitry 214, and/or vehicle management circuitry 216 may both leverage use of the same processor, network interface, storage medium, or the like to perform their associated functions, such that duplicate hardware is not required for each set of circuitry. The use of the term "module" and/or the term "circuitry" as used herein with respect to components of the apparatus 200 should therefore be understood to include particular hardware configured to perform the functions associated with the particular circuitry as described herein.

Additionally or alternatively, the terms "module" and "circuitry" should be understood broadly to include hardware and, in some embodiments, software and/or firmware for configuring the hardware. For example, in some embodiments, "module" and "circuitry" may include processing circuitry, storage media, network interfaces, input/output devices, and the like. In some embodiments, other elements of the apparatus 200 may provide or supplement the functionality of the particular module. For example, the processor 202 may provide processing functionality, the memory 204 may provide storage functionality, the communications circuitry 208 may provide network interface functionality, and the like, to one or more of the other modules.

In some embodiments, the processor 202 (and/or co-processor or any other processing circuitry assisting or otherwise associated with the processor) may be in communication with the memory 204 via a bus for passing information among components of the apparatus. The memory 204 may be non-transitory and may include, for example, one or more volatile and/or non-volatile memories. In other words, for example, the memory may be an electronic storage device (e.g., a computer readable storage medium). The memory 204 may be configured to store information, data, content, applications, instructions, or the like, for enabling the apparatus 200 to carry out various functions in accordance with example embodiments of the present disclosure.

The processor 202 may be embodied in any one of a myriad of ways and may, for example, include one or more processing devices configured to perform independently. Additionally or alternatively, the processor 202 may include one or more processors configured in tandem via a bus to enable independent execution of instructions, pipelining, and/or multithreading. The use of the terms "processor," "processing module," and "processing circuitry" may be understood to include a single-core processor, a multi-core processor, multiple processors internal to the apparatus, and/or remote or "cloud" processors.

In an example embodiment, the processor 202 may be configured to execute computer-coded instructions stored in the memory 204 or otherwise accessible to the processor. Alternatively, or additionally, the processor 202 may be configured to execute hard-coded functionality. As such, whether configured by hardware or software means, or by a combination thereof, the processor 202 may represent an entity (e.g., physically embodied in circuitry) capable of performing operations according to an embodiment of the present disclosure while configured accordingly. Alternatively, as another example, when the processor is embodied as an executor of software instructions, the instructions may specifically configure the processor to perform the algorithms and/or operations described herein when the instructions are executed.

In some embodiments, the processor 202 is configured to perform signal modeling and processing thereof. For example, in some example contexts, the processor 202 includes hardware, software, firmware, and/or a combination thereof, that receives, generates, retrieves, and/or otherwise identifies data utilized in modeling a signal strength, for example entity parameter data and/or dynamic environment data as described herein. Additionally or alternatively, in some example contexts, the processor 202 includes hardware, software, firmware, and/or a combination thereof, that generates a model of a signal strength for at least one signal type in an environment. Additionally or alternatively, in some example contexts, the processor 202 includes hardware, software, firmware, and/or a combination thereof, that identifies at least one set of coverage areas based at least in part on the model of the signal strength for at least one signal type. Additionally or alternatively still, in some example contexts, the processor 202 includes hardware, software, firmware, and/or a combination thereof, that outputs one or more coverage maps to a user interface, for example at least one vertical profile coverage map and/or at least one top-down coverage map. Additionally or alternatively still, in some example contexts, the processor 202 includes hardware, software, firmware, and/or a combination thereof, that enables one or more user inputs via the user interface, for example to alter renderings to the user interface and/or to control operation of at least one vehicle based at least in part on the data rendered via the user interface.

In some embodiments, the apparatus 200 may include input/output circuitry 206 that may, in turn, be in communication with processor 202 to provide output to the user and/or, in some embodiments, to receive an indication of a user input via user interaction data. The input/output circuitry 206 may comprise hardware, software, firmware, and/or a combination thereof, that generates and/or otherwise outputs a user interface, includes the user interface itself, and/or in some embodiments includes a display to which the user interface is rendered. In some embodiments, the input/output circuitry 206 may comprise a web user interface, a mobile application (e.g., a native mobile application or web application), a desktop application (e.g., a native desktop application or web application), a linked or networked client device, a kiosk, or the like. In some embodiments, the input/output circuitry 206 may also include a keyboard, a mouse, a joystick, a touch screen, touch areas, soft keys, a microphone, a speaker, or other input/output mechanisms, peripherals, or the like. The processor 202 and/or input/output circuitry 206 comprising a processor, for example processor 202, may be configured to control one or more functions of one or more user interface elements through computer program instructions (e.g., software and/or firmware) stored on a memory accessible to the processor (e.g., memory 204, and/or the like).

The communications circuitry 208 may be any means such as a device or circuitry embodied in either hardware or a combination of hardware and software that is configured to receive and/or transmit data from/to a network and/or any other device, circuitry, or module in communication with the apparatus 200. In this regard, the communications circuitry 208 may include, for example, at least a network interface for enabling communications with a wired or wireless communication network. For example, the communications circuitry 208 may include one or more network interface cards, antennas, buses, switches, routers, modems, and supporting hardware and/or software, or any other device suitable for enabling communications via a network. Additionally or alternatively, the communication interface may include the circuitry for interacting with the antenna(s) to cause transmission of signals via the antenna(s) or to handle receipt of signals received via the antenna(s). In some such embodiments, the communications circuitry 208\ functions as a networking connection for facilitating communications between the apparatus 200 and one or more networked devices, such as a client device and/or one or more external datastore(s).

In some embodiments, the apparatus 200 includes at least environment data circuitry 210. In some embodiments, the environment data circuitry 210 includes hardware, software, firmware, and/or any combination thereof, that supports functionality associated with monitoring data associated with a particular environment. In some embodiments, the environment data circuitry 210 utilizes processing circuitry, for example the processor 202, to perform one or more of these actions. In some embodiments, the environment data circuitry 210 includes hardware, software, firmware, and/or any combination thereof, to receive, obtain, generate, and/or otherwise identify entity parameter data corresponding to at least one signal handling entity. Additionally or alternatively, in some embodiments, the environment data circuitry 210 includes hardware, software, firmware, and/or any combination thereof, to receive, obtain, generate, and/or otherwise identify dynamic environment data associated with a particular environment, for example where the dynamic environment data impacts at least one signal in the environment. In some embodiments, the environment data circuitry 210 communicates with one or more external systems, servers, vehicles, and/or the like to receive one or more portions of data, for example entity parameter data and/or dynamic environment data. Additionally or alternatively, in some embodiments, the environment data circuitry 210 generates, determines, derives, and/or directly collects one or more portions of such data, for example entity parameter data and/or dynamic environment data. It should be appreciated that, in some embodiments, the environment data circuitry 210 may include a separate processor, specially configured field programmable gate array (FPGA), or a specially configured application-specific integrated circuit (ASIC).

In some embodiments, the apparatus 200 includes at least modeling circuitry 212. In some embodiments, the modeling circuitry 212 includes hardware, software, firmware, and/or any combination thereof that supports functionality associated with generating a model of signal strength in an environment for at least one signal type. In some embodiments, the modeling circuitry 212 includes hardware, software, firmware, and/or any combination thereof, to model a signal propagation for at least one signal handling entity. The modeling circuitry 212 in some embodiments is configured to model the signal propagation based at least in part on received data, for example the entity parameter data and the dynamic environment data. Additionally or alternatively, in some embodiments, the modeling circuitry 212 includes hardware, software, firmware, and/or any combination thereof, to determine the signal strength for the at least one signal type in the environment. The modeling circuitry 212 in some embodiments is configured to determine the signal strength based at least in part on a combination of the signal propagations for at least one signal handling entity. In some embodiments, the modeling circuitry 212 includes hardware, software, firmware, and/or any combination thereof, that models signal propagation for each signal handling entity associated with a particular environment. Additionally or alternatively, in some embodiments, the modeling circuitry 212 includes hardware, software, firmware, and/or any combination thereof, to identify a set of coverage areas within the environment that are associated with different signal strengths, for example based at least in part on the model. It should be appreciated that, in some embodiments, the modeling circuitry 212 may include a separate processor, specially configured field programmable gate array (FPGA), or a specially configured application-specific integrated circuit (ASIC).

In some embodiments, the apparatus 200 includes at least interface management circuitry 214. In some embodiments, the interface management circuitry 214 includes hardware, software, firmware, and/or any combination thereof that supports functionality associated with outputting particular data based at least in part on a generated model. In some embodiments, the interface management circuitry 214 includes hardware, software, firmware, and/or any combination thereof, to output at least one top-down coverage map. In some such embodiments the top-down coverage map is based at least in part on a generated model, and/or a set of coverage areas identified therefrom. Additionally or alternatively, in some embodiments, the interface management circuitry 214 includes hardware, software, firmware, and/or any combination thereof, to output at least one vertical profile coverage map. In some such embodiments the vertical profile coverage map is based at least in part on a generated model. Additionally or alternatively, in some embodiments, the interface management circuitry 214 includes hardware, software, firmware, and/or any combination thereof, to cause rendering of a user interface that includes one or more coverage maps, for example at least one outputted vertical profile coverage map and/or top-down coverage map. In some such embodiments, the interface management circuitry 214 is configured to cause rendering (or otherwise output) the user interface based at least in part on at least one signal interface parameter. It should be appreciated that, in some embodiments, the interface management circuitry 214 may include a separate processor, specially configured field programmable gate array (FPGA), or a specially configured application-specific integrated circuit (ASIC).

In some embodiments, the apparatus 200 includes at least vehicle management circuitry 216. In some embodiments, the vehicle management circuitry 216 includes hardware, software, firmware, and/or any combination thereof that supports functionality associated with controlling operation of a vehicle. In some embodiments, the vehicle management circuitry 216 includes hardware, software, firmware, and/or any combination thereof, to initiate updates to a travel plan associated with a vehicle via at least one user interface, for example at least one user interface output via the interface management circuitry 214. In some such embodiments, the vehicle management circuitry 216 is configured to generate a flight plan for at least one vehicle based at least in part on a set of coverage areas associated with a particular environment. Additionally or alternatively, in some embodiments, the vehicle management circuitry 216 includes hardware, software, firmware, and/or any combination thereof, to receive an updated proposed travel plan for at least one vehicle in response to user input with at least one user interface. Additionally or alternatively, in some embodiments, the vehicle management circuitry 216 includes hardware, software, firmware, and/or any combination thereof, to transmit instructions to at least one vehicle that causes the vehicle to operate in accordance with a particular travel plan, for example a generated travel plan and/or an updated proposed travel plan. Additionally or alternatively, in some embodiments, the vehicle management circuitry 216 includes hardware, software, firmware, and/or any combination thereof, to determine and/or select an optimal network for use by at least one vehicle within a particular environment. Additionally or alternatively, in some embodiments, the vehicle management circuitry 216 includes hardware, software, firmware, and/or any combination thereof, to cause a vehicle to connect to a particular network, for example a determined optimal network. It should be appreciated that, in some embodiments, the vehicle management circuitry 216 may include a separate processor, specially configured field programmable gate array (FPGA), or a specially configured application-specific integrated circuit (ASIC).

In some embodiments, one or more of the aforementioned components is combined to form a single module. For example, in some embodiments, at least one of the environment data circuitry 210, modeling circuitry 212, interface management circuitry 214, and/or vehicle management circuitry 216, is combined with one or more other components, such as processor 202, into a single module. The combined sets of circuitry may be configured to perform some or all of the functionality described above with respect to the individual modules. Additionally or alternatively, in some embodiments, one or more of the sets of circuitry described above may be configured to perform one or more of the actions described with respect to one or more of the other sets of circuitry, such that the redundant set of circuitry may be optionally removed.

As described above, and as will be appreciated based on this disclosure, embodiments of the present disclosure may be configured as methods, mobile devices, frontend graphical user interfaces, backend network devices, and the like. Accordingly, embodiments may comprise various means including entirely hardware, entirely software, or a combination of hardware and software. Furthermore, embodiments may take the form of a computer program product on at least one non-transitory computer-readable storage medium having computer-readable program instructions (e.g., computer software) embodied in the storage medium. Similarly, embodiments may take the form of computer program code stored on at least one non-transitory computer-readable storage medium. Any suitable computer-readable storage medium may be utilized including non-transitory hard disks, CD-ROMs, flash memory, optical storage devices, or magnetic storage devices.

As will be appreciated, any such computer program instructions and/or other type of code may be loaded onto a computer, processor or other programmable apparatus circuitry to produce a machine, such that the computer, processor, or other programmable circuitry that execute the code on the machine creates the means for implementing various functions, including those described herein.

The computing systems described herein can include clients and servers. A client and server are generally remote from each other and typically interact through a communication network. The relationship of client and server arises by virtue of computer programs running on the respective computers and having a client-server relationship to each other. In some embodiments, a server transmits information/data (e.g., an HTML page or parseable data representation) to a client device (e.g., for purposes of displaying information/data to and receiving user input from a user interacting with the client device). Information/data generated at the client device (e.g., a result of the user interaction) can be received from the client device at the server.

While this disclosure contains many specific implementation details, these should not be construed as limitations on the scope of this disclosure or of what may be claimed, but rather as description of features specific to particular embodiments of particular inventions. Certain features that are described herein in the context of separate embodiments can also be implemented in combination in a single embodiment. Conversely, various features that are described in the context of a single embodiment can also be implemented in multiple embodiments separately or in any suitable sub-combination. Moreover, although features may be described above as acting in certain combinations and even initially claimed as such, one or more features from a claimed combination can in some cases be excised from the combination, and the claimed combination may be directed to a sub-combination or variation of a sub-combination.

Similarly, while operations are depicted in the drawings in a particular order, this should not be understood as requiring that such operations be performed in the particular order shown or in sequential order, or that all illustrated operations be performed, to achieve desirable results, unless described otherwise. In certain circumstances, multitasking and parallel processing may be advantageous. Moreover, the separation of various system components in the embodiments described above should not be understood as requiring such separation in all embodiments, and it should be understood that the described program components and systems can generally be integrated together in a single software product or packaged into multiple software products. Any operational step shown in broken lines in one or more flow diagrams illustrated herein are optional for purposes of the depicted embodiment.

Thus, particular embodiments of the subject matter have been described. Other embodiments are within the scope of the following claims. In some cases, the actions recited in the claims can be performed in a different order and still achieve desirable results. In addition, the processes depicted in the accompanying figures do not necessarily require the particular order shown, or sequential order, to achieve desirable results, unless described otherwise. In certain implementations, multitasking and parallel processing may be advantageous.

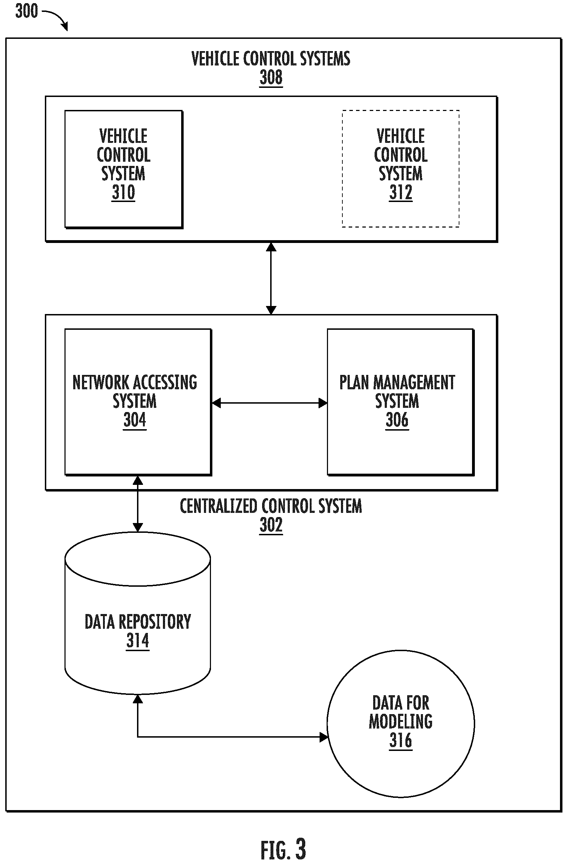

FIG. 3 illustrates an example data flow between components of an example system in accordance with at least one example embodiment of the present disclosure. Specifically, FIG. 3 depicts an example system 300. The system 300 includes a number of sub-systems that may perform the modeling described herein. For example, in some embodiments, the system 300 embodies a particular implementation of the vehicle signal modeling system 102. As depicted, the system 300 includes vehicle control systems 308, centralized control system 302, and data repository 314. It will be appreciated that, in some embodiments, one or more of the sub-systems may be combined into a single sub-system that performs the operations of both sub-systems.

The vehicle control systems 308 includes at least one vehicle control system 310. In some embodiments, the vehicle control systems 308 includes a single vehicle control system 310, or in other embodiments includes a plurality of individual vehicle control systems including vehicle control system 310 and at least vehicle control system 312. In some such embodiments where the vehicle control system 310 includes a plurality of vehicle control systems, control of a particular vehicle may be shared or may be handed over from a first vehicle control system to a second vehicle control system, for example from vehicle control system 310 to vehicle control system 312.

Each vehicle control system is configured to enable control of operations of a vehicle, for example to enable the vehicle to traverse throughout an environment in accordance with commands inputted via the vehicle control system. For example, in some embodiments, the vehicle control system 310 includes or embodies a remote computing device embodied in hardware, software, firmware, and/or a combination thereof, that enables remote piloting or other control of at least one associated vehicle. Additionally or alternatively, in some embodiments, the vehicle control system 310 embodies or includes a primary flight system onboard the vehicle to be controlled itself. In some embodiments, the vehicle control system 310 includes at least one display that enables rendering of user interfaces, for example any of the user interfaces depicted and/or described herein to facilitate analysis of one or more travel plans associated with a vehicle with respect to signal strengths within an environment, and/or updating of connection of the vehicle to one or more communications networks and/or updating of a travel plan associated with the vehicle.

The centralized control system 302 includes network accessing system 304 and plan management system 306. In some embodiments, the network accessing system 304 includes at least one computing device embodied in hardware, software, firmware, and/or any combination thereof, that enables access to at least one communications network to communicate with one or more external vehicles and/or other systems via the communications network. In some embodiments, the plan management system 306 includes at least one computing device embodied in hardware, software, firmware, and/or any combination thereof, that is configured to perform travel plan management for at least one vehicle. In some embodiments, the plan management system 306 generates travel plan information for the at least one vehicle based at least in part on data received by the centralized control system 302, for example stored to the data repository 314. Additionally or alternatively, in some embodiments, the plan management system 306 is configured to support modeling and/or outputting of data associated with modeling signal strengths in an environment for use in analyzing and/or updating travel plans associated with at least one vehicle. For example, in some embodiments, the plan management system 306 is configured to generate at least one model of signal strengths in an environment based at least in part on the received data, for example available in data repository 314, and/or to generate user interfaces based at least in part on the data in or associated with the generated model. In some embodiments, the centralized control system 302 outputs user interfaces to a display associated with the centralized control system 302 or a sub-system thereof. In some embodiments, the centralized control system 302 outputs user interfaces to a display associated with one or more of the vehicle control systems 308, for example via communication with the vehicle control system of the vehicle control systems 308. In some embodiments, the vehicle control systems 308 includes one or more ground control systems associated with an end user pilot or other operator, and the centralized control system 302 is embodied by at least one ground control center that facilitates communication between multiple ground control systems and/or other ground control centers.

The data repository 314 includes or is embodied by any number of memories, computing devices, database servers, and/or the like that are configured for persistent data storage. In this regard, as depicted, the data repository 314 is specially configured via hardware, software, firmware, and/or any combination thereof, to store at least data for modeling 316. The data for modeling 316 includes any input data utilized to generate a model of signal strengths throughout the environment as depicted and described herein. For example, in some embodiments, the data for modeling 316 includes entity parameter data associated with one or more signal handling entities, and/or dynamic environment data associated with one or more environments, vehicles, signal handling entities, and/or the like. In some embodiments, some or all of the data for modeling 316 is determined and/or stored to the data repository 314 by the network accessing system 304, for example based at least in part on the results of operations performed by the centralized control system 302. Additionally or alternatively, in some embodiments, some or all of the data for modeling 316 is received, obtained, identified, and/or otherwise determined and stored to the data repository 314 by one or more external data source systems, for example by being directly written to the data repository 314 and/or received by the centralized control system 302 and stored to the data repository 314 by the centralized control system 302.

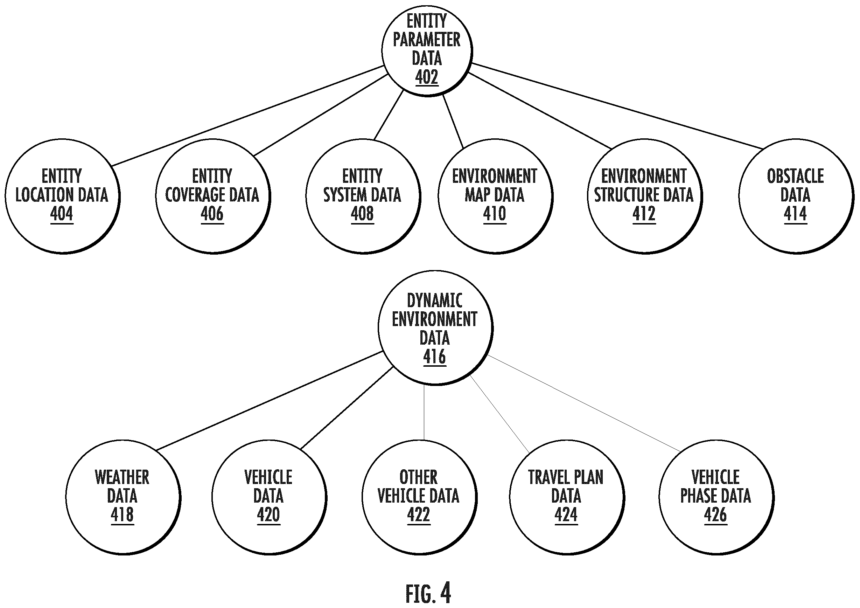

In some embodiments, at least the centralized control system 302 and the data repository 314 are positioned onboard a vehicle. The onboard system 300 can be configured to model signal strengths in the environment through which the vehicle is traversing through or planning to traverse through. In various embodiments, the vehicle control systems 308 may be positioned onboard the vehicle. FIG. 4 illustrates a visualization of an example data architecture in accordance with at least one example embodiment of the present disclosure. Specifically, FIG. 4 represents a data architecture of sub-types of data that may embody and/or be included in example entity parameter data and/or dynamic environment data, specifically entity parameter data 402 and dynamic environment data 416. It should be appreciated that in some embodiments, data may include any combination of the sub-portions of data as depicted and described. For example, in some embodiments, the entity parameter data 402 may include or be embodied by only one portion of the 404-414, whereas in other embodiments the entity parameter data 402 may include or embodied by any number and combination of the portions of data 404-414. Similarly, in some embodiments, the dynamic environment data 416 may include or be embodied by only one portion of the 418-426, whereas in other embodiments the dynamic environment data 416 may include or be embodied by any number and combination of the portions of data 418-426. Additionally or alternatively, in some embodiments, different portions of data may be received from the same external sources, and/or different portions of data may be received from distinct external sources, for example one or more external systems, sensors, and/or the like.

As illustrated, in some embodiments, the entity parameter data 402 optionally includes entity location data 404. In some embodiments the entity location data 404 includes one or more data values that represent an absolute and/or relative location of at least one signal handling entity. In some embodiments, the entity location data 404 indicates an environment within which at least one signal handling entity is located. Additionally or alternatively, in some embodiments, the entity location data 404 is utilized to identify at least one environment that at least one signal handling entity affects, for example by supporting signal propagation within the environment based at least in part on a generated signal radius and/or the like. In some embodiments, the entity location data 404 corresponds to GPS and/or other coordinate values of physical components embodying at least one system of a signal handling entity.

As illustrated, in some embodiments, the entity parameter data 402 optionally includes entity coverage data 406. In some embodiments, the entity coverage data 406 includes one or more data values that represents signal types or other signal coverage details processed by each particular signal handling entity.

As illustrated, in some embodiments, the entity parameter data 402 optionally includes entity system data 408. In some embodiments, the entity system data 408 includes data values representing components or configurations of hardware, software, firmware, and/or the like of a signal handling entity that generates at least one signal of a signal type within an environment. For example, in some embodiments, the entity system data 408 represents antenna hardware configurations, antenna types, frequency bands, gain amounts, and/or other aspects of the signal handling entity that impact the signals that can be communicated by one or more systems of that signal handling entity.

As illustrated, in some embodiments, the entity parameter data 402 optionally includes environment map data 410. In some embodiments, the environment map data 410 includes data values representing a layout of an environment and natural features thereof. For example, in some embodiments, the environment map data 410 includes topographical data values at one or more locations within an environment. Additionally or alternatively, in some embodiments, the environment map data 410 includes data defining geographic regions that represent particular environmental features (e.g., mountain ranges, forests, fields, and/or the like).

As illustrated, in some embodiments, the entity parameter data 402 optionally includes environment structure data 412. In some embodiments, the environment structure data 412 includes data values representing features of fixtures or other static features in an environment. For example, in some embodiments, the environment structure data 412 includes data that defines buildings, towers, and/or other physical structures within an environment. In some embodiments, the structures defined by environment structure data 412 may embody a particular example of an object for a vehicle to avoid while navigating throughout the environment.

As illustrated, in some embodiments, the entity parameter data 402 optionally includes obstacle data 414. In some embodiments, the obstacle data 414 includes data values representing other obstacles within the environment, where a vehicle navigating throughout the environment is to avoid said obstacles. For example, in some embodiments the obstacle data 414 includes manmade obstacles, environment obstacles, and/or other fixed or non-fixed physical structures, items, and/or the like within an environment.

The entity parameter data 402 may be received, generated, and/or otherwise identified alone or together with the dynamic environment data 416. As illustrated, in some embodiments, dynamic environment data 416 optionally includes weather data 418. In some embodiments, the weather data 418 includes data values representing current and/or future weather affecting a particular environment. For example, in some embodiments the entity parameter data 402 represents weather systems currently in an environment and/or predicted to be affecting an environment at a particular time. It will be appreciated that the weather data 418 may be sourced from any of a myriad of systems, for example weather systems in an environment, weather data aggregation systems associated with multiple environments, other vehicles within an environment, centralized weather prediction models, sensors in an environment, and/or the like.

As illustrated, in some embodiments dynamic environment data 416 optionally includes vehicle data 420. In some embodiments, the vehicle data 420 includes data values representing current operational values associated with operation of a particular focused vehicle. For example, in some embodiments, the vehicle data 420 includes speed data associated with a vehicle, heading data associated with the vehicle, fuel status data associated with the vehicle, battery status data associated with the vehicle, system functionality data associated with at least one system of the vehicle, stage of travel data associated with the vehicle, travel plan data associated with the vehicle, and/or the like. The vehicle data 420 may be derived based at least in part on data associated with or received from the vehicle, and in some embodiments the vehicle data 420 is received directly from the vehicle itself.

As illustrated, in some embodiments dynamic environment data 416 optionally includes other vehicle data 422. In some embodiments, the other vehicle data 422 includes any of the data values discussed and/or described with respect to the vehicle data 420 associated with any number of other vehicles. The other vehicles corresponding to the other vehicle data 422 in some embodiments represents other vehicles within the same environment as the vehicle corresponding to vehicle data 420. For example, in some embodiments, the other vehicle data 422 includes speed data associated with at least one other vehicle in the environment, heading data associated with at least one other vehicle in the environment, fuel status data at least one other vehicle in the environment, battery status data associated with at least one other vehicle in the environment, system functionality data associated with at least one system of at least one other vehicle in the environment, stage of travel data associated with at least one other vehicle in the environment, travel plan data associated with at least one other vehicle in the environment, and/or the like.

As illustrated, in some embodiments dynamic environment data 416 includes travel plan data 424. In some embodiments, the travel plan data 424 includes data values representing at least one travel plan for at least one vehicle. The travel plan data may correspond to the vehicle associated with vehicle data 420, and/or any of the vehicles associated with other vehicle data 422. In this regard, the travel plan data 424 in some embodiments indicates whether a plurality of vehicles will be within the same environment at a particular time. Additionally or alternatively, in some embodiments, the travel plan data 424 indicates locations of vehicles at particular timestamps, such that effects caused by vehicle locations are determinable based at least in part on the location of one or more vehicles represented in the travel plan data 424.

As illustrated, in some embodiments dynamic environment data 416 includes vehicle phase data 426. In some embodiments, the vehicle phase data 426 includes data values representing a current phase of operation along a travel plan for one or more vehicles. For example, in some embodiments in the context of air vehicles, vehicle phase data 426 indicates whether a particular vehicle is operating in a flight planning phase, a takeoff phase, a climb phase, a cruise phase, an approach phase, a landing phase, a taxi phase, and/or the like. The vehicle phase data 426 may include separate portions of data corresponding to any number of vehicles.

In various examples, the dynamic environment data 416 may include a status of one or more signal handling entities 108. For example, signal handling entities 108, such as cell towers, radio frequency stations, or satellites, may periodically be shutdown due to failure or planned maintenance. The status of the one or more signal handling entities 108 can include data indicative as to whether each signal handling entity 108 is operational.

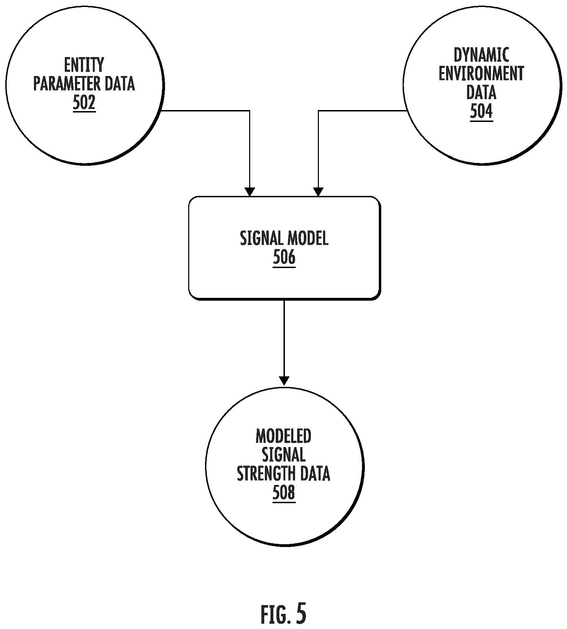

FIG. 5 illustrates a data flow for modeling signal strengths in accordance with at least one example embodiment of the present disclosure. As illustrated, FIG. 5 depicts modeling based at least in part on entity parameter data 502 and dynamic environment data 504 to generate modeled signal strength data 508 utilizing a signal model 506. In some embodiments, the entity parameter data 502 is embodied by entity parameter data 402 as depicted and described with respect to FIG. 4, and dynamic environment data 504 is embodied by dynamic environment data 416 as depicted and described with respect to FIG. 4.

The signal model 506 includes one or more software models that determines and/or otherwise virtually projects communication capabilities for at least one signal of at least one signal type based at least in part on the provided inputs, for example the entity parameter data 502 and the dynamic environment data 504. For example, in some embodiments, the signal model 506 determines a range of signal propagation in which signals of a particular signal type are capturable via the systems of a particular signal handling entity, or a range of signal propagation for signals of a particular signal type that are generated by the signal handling entity. In some embodiments, the signal model 506 utilizes the entity parameter data 502 and/or the dynamic environment data 504 to determine a signal strength associated with at least one signal type based at least in part on hardware, software, and/or firmware configuration of one or more systems that perform signal communication, for example at least one antenna and/or supporting system that generates and transmits signals and/or captures and processes signals of the at least one signal type. Additionally or alternatively, in some embodiments, the signal model 506 utilizes the entity parameter data 502 and/or dynamic environment data 504 to determine external effects on the signal strength associated with a particular signal handling entity, for example generated by at least one system including any number of antennas and/or the like as discussed above. For example, the signal of a particular signal type may be affected by topology of an environment, objects in the environment, other vehicles in the environment, and/or any other aspects of an environment, which may be static or dynamic, that cause a decrease or amplification in signal propagation for signals of at least one signal type within the environment. In some such embodiments, the environment, object, vehicle, and/or other feature may block signals of certain signal types from propagating at particular locations within the environment, for example. Additionally or alternatively, multiple signal handling entities that are located proximate to one another may boost the signal strength for a particular signal type at particular locations within the environment based on cooperation of the communication capabilities of the two signal handling entities. In some embodiments, particular type-specific modeling parameters may be utilized, where the value of the type-specific modeling parameter differs based at least in part on the signal type to be generated. In this regard, the type-specific modeling parameters may alter the impact of environmental objects or effects, signal propagation distance, and/or the like within the signal model 506. In some embodiments, the signal model 506 in some embodiments is embodied by one or more existing software models executed on one or more systems, servers, and/or the like. For example, the one or more existing software models may include Ansys HFSS and SBR+, Ansys STK, and/or Keysight SystemVue. In various examples, Ansys HFSS and SBR+ may be used to model electromagnetic behavior of on-board antennas of the vehicle. Ansys STK may be used for satellite and channel modelling and interaction with earth terminals. Keysight SystemVue may be used for modelling of signal handling entities, such as earth station RF channels that include RF components, controls, and satellite RF transmit/receive chains. Keysight SystemVue may also provide a beamsteering mechanism.

The signal model 506 generates and/or otherwise enables outputting of modeled signal strength data 508. In some embodiments, the modeled signal strength data 508 represents a signal strength for particular signal types at particular locations within an environment. For example, in some embodiments, the modeled signal strength data 508 comprises a signal propagation for a particular signal type throughout the environment, where the signal propagation represents signal strengths for a particular signal type at distinct locations throughout the environment, and/or along a particular path in the environment. In some such embodiments, the signal model 506 determines data representing particular geographic regions within the environment associated with a particular signal strength for a particular signal type, where such signal strength corresponds to a particular signal handling entity. In some embodiments, an area of defined signal strength corresponds to a particular coverage area for a particular signal type. It should be appreciated that a particular signal type may be associated with a plurality of signal handling entities throughout an environment, such that the coverage areas corresponding to the signal type may be based on the combination of signal handling entities.

In some embodiments, the signal model 506 is configured to generate any number of types of signal strengths. For example, in some embodiments, the signal model 506 is configured to represent one or more modeled connectivity signal strengths. In some such embodiments, the modeled connectivity signal strengths may correspond to signal strengths for transmission of data communications signals, for example for purposes of data transmission between a vehicle and another system. In some embodiments, the signal model 506 is configured to represent one or more modeled position accuracy signal strengths. In some such embodiments, the modeled position accuracy signal strengths may correspond to signal strengths for GPS signals or other location services signals that identify a location of a vehicle within an environment. It will be appreciated that, in some embodiments, different types of signal handling entities may correspond to different signal types to be modeled via the signal model 506.

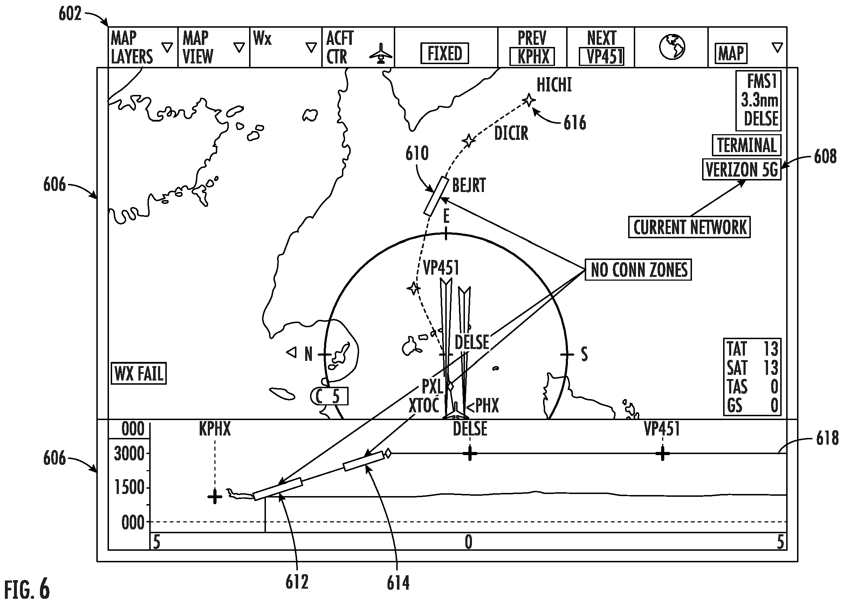

FIG. 6 illustrates an example user interface depicting signal strengths along a travel path of a vehicle in accordance with at least one example embodiment of the present disclosure. Specifically, FIG. 6 illustrates an example user interface 602. The user interface 602 includes a plurality of sub-interfaces that provide distinct perspectives associated with a travel plan of a vehicle navigating throughout an environment, particularly a flight plan for an aerial vehicle and signal strength representing connectivity thereof for the vehicle. In some embodiments, the user interface 602 is outputted to a display of the vehicle itself. For example, in some embodiments, the user interface 602 is outputted to a primary flight display or multi-function display of the aerial vehicle depicted in the user interface 602. Additionally or alternatively, in some embodiments, the user interface 602 is outputted to a display of a system that monitors and/or remotely controls the vehicle. Some embodiments output the user interface 602 by causing rendering of the user interface 602 to one or more such computing devices, and/or displays thereof, embodied in hardware, software, firmware, and/or any combination thereof.

As depicted the user interface 602 includes a first sub-interface embodying a top-down coverage map 604. The top-down coverage map 604 includes a representation of a flight plan 616 corresponding to a particular vehicle. In some embodiments the vehicle is predetermined, and in some embodiments the vehicle is selectable via the user interface 602 or another user interface. The flight plan of the representation of the flight plan 616 depicts various travel phases that the vehicle is to traverse throughout the environment, specifically defining the path that the aerial vehicle is to travel along from a first location to a second location (e.g., from a starting location to a destination location as defined by a flight plan associated with the vehicle). In some embodiments, the flight plan in the representation of the flight plan 616 is defined by particular dynamic environment data associated with the vehicle, for example as depicted and described with respect to the dynamic environment data 416 and/or dynamic environment data 504.

The user interface 602 includes at least one visual indication of a portion of the representation of the flight plan 616 along which a particular signal type, or in some embodiments all signal types, are not available with sufficient signal strength to enable acceptable, or any, data communications with the vehicle. For example as illustrated, the user interface 602 includes dead zone area indicator 610. The dead zone area indicator 610 visually indicates the locations along the representation of the flight plan 616 at which signal strength corresponding to one or more particular signal types is determined to be unavailable, or otherwise insufficient (e.g., below a certain threshold level) for communication with the vehicle. In some embodiments, the signal strengths at the various locations along the flight plan depicted in the representation of the flight plan 616 are determined from a particular model, for example the signal model 506 as depicted and described with respect to FIG. 5. In this regard, the dead zone area indicator 610 is overlaid at the locations corresponding to such low or no signal strength for a particular signal type.

The user interface 602 depicts the signal strength for signal handling entities associated with a particular provider identifier. Specifically, as illustrated, the user interface 602 includes a selectable signal interface parameter 608 defining the particular provider identifier to be rendered. As illustrated, the selectable signal interface parameter 608 depicts a particular selected provider identifier to be utilized in determining coverage areas of signal strengths to be rendered via the user interface 602. In some such embodiments, the signal interface parameter 608 is selectable to change the particular provider identifier for which coverage areas are to be rendered. For example, in some embodiments, the user interface 602 is rendered based at least in part on the provider identifier selected via the signal interface parameter 608, such that the dead zone area indicators rendered along the flight plan depicted in the representation of the flight plan 616 correspond to the locations within coverage areas generated by at least one signal handling entity corresponding to the provider identifier (e.g., owned, operated by, or otherwise associated with the provider identifier). It should be appreciated that each provider identifier may be associated with any number of distinct signal handling entities at any of a myriad of locations within an environment, such that each provider identifier is associated with distinct coverage are having signal strengths of zero or otherwise below a sufficient threshold for communications with a vehicle at distinct locations throughout the environment. Such "dead zones" having zero or insufficient signal strength may be generated via the model by modeling signal propagation of one or more signal types based at least in part on any of a myriad of data associated with the particular provider identifier, for example corresponding entity parameter data and/or dynamic environment data.

It should be appreciated that the top-down coverage map 604 provides a particular first perspective of the environment within which a vehicle is operating. Specifically, the top-down coverage map 604 depicts a top-down view of the signal strength at particular locations in an environment, for example along an x-y plane. In this regard, the top-down coverage map 604 may provide a representation of the flight path and signal strengths along the flight plan without indicating a height in the environment at which the vehicle will be traveling along the flight plan depicted in the representation of the flight plan 616. In this regard, it will be appreciated that the dead zone areas corresponding to each provider identifier may differ based on the locations of signal handling entities associated with the provider identifier, configuration of such signal handling entities associated with the provider identifier, and/or the like. In this regard, the top-down coverage map 604 may be dynamically updated as an updated profile identifier is selected via the signal interface parameter 608.

The user interface 602 further includes a vertical profile coverage map 606. As illustrated, the vertical profile coverage map 606 depicts a second perspective of the environment. Specifically, the vertical profile coverage map 606 depicts a side profile view of the signal strength at particular locations in the environment. In this regard, it should be appreciated that the environment depicted in the top-down coverage map 604 is the same environment as the environment depicted in the vertical profile coverage map 606.

As illustrated, the vertical profile coverage map 606 includes a second representation of the flight plan 618. The second representation of the flight plan 618 depicts a side profile perspective of the same flight plan depicted in the representation of the flight plan 616. In this regard, the second representation of the flight plan 618 depicts the vertical location of a vehicle at distinct points along the flight plan, for example as depicted as a vertical position in an x-z plane of the environment. It should be appreciated that the vertical positions depicted in the second representation of the flight plan 618 and the horizontal positions depicted in the representation of the flight plan 616 in some embodiments are derivable from or represented in the same source data, for example flight plan data in dynamic environment data received or otherwise identified from one or more data sources.

The vertical profile coverage map 606 in some embodiments includes any number of visual indicators corresponding to locations where a signal strength for at least one signal type is zero or otherwise determined insufficient to facilitate communication of signals of the particular signal type via at least one network associated with the selected provider identifier, for example corresponding to the signal interface parameter 608. Specifically, the vertical profile coverage map 606 includes dead zone area indicator 612 and dead zone area indicator 614. In some embodiments, the indicators represented in the vertical profile coverage map 606 corresponds to one or more indicators in the top-down coverage map 604. For example, in some embodiments, the dead zone area indicator 614 and the dead zone area indicator 610 correspond to the same locations within the environment, depicted such that the top-down coverage map 604 depicts the location from the first perspective and vertical profile coverage map 606 depicts the location from the second perspective. In this regard, the combination of the top-down coverage map 604 and vertical profile coverage map 606 enables a particular user to ascertain a situational awareness regarding the planned connectivity of the vehicle along a particular travel plan, for example the flight plan as depicted.

In some embodiments, the vertical profile coverage map 606 is similarly updated based at least in part on the provider identifier selected via the signal interface parameter 608. For example, in some embodiments, the vertical profile coverage map 606 is dynamically updated to represent coverage areas corresponding to signal handling entities associated with a distinct provider identifier in a circumstance where the user updates the selected provider identifier via the signal interface parameter 608. In this regard, the top-down coverage map 604 and vertical profile coverage map 606 continue depicting coverage areas corresponding to the same provider identifier as selected via the signal interface parameter 608.

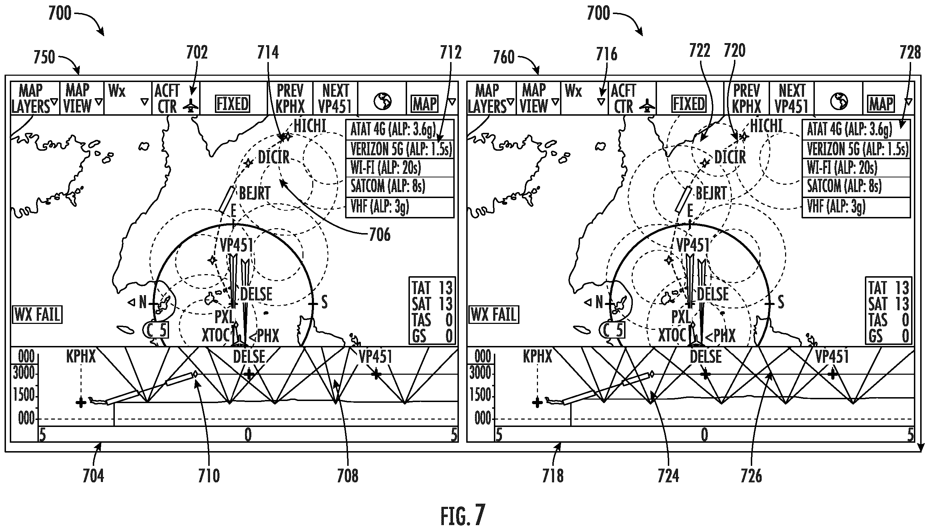

FIG. 7 illustrates an example user interface including a top-down coverage map and vertical profile coverage map in accordance with at least one example embodiment of the present disclosure. Specifically, FIG. 7 depicts user interface 700, which is dynamically updated from a first user interface 750 associated with a first communications network, for example formed by a first combination of signal handling entities, associated with a first provider identifier to a second user interface 760 associated with a second communications network, for example formed by a second combination of signal handling entities, associated with a second provider identifier. In some embodiments, the user interface 700 is dynamically updated upon selection of an updated provider identifier utilizing a user interface element corresponding to a particular signal interface parameter representing the selected provider identifier. It should be appreciated that the signal interface parameter may be selected from any of a myriad of signal interface parameters representing different provider identifiers associated with different available communications network that a vehicle may connect to within a particular environment.

FIG. 7 depicts first user interface 750 corresponding to a first communications network available to the vehicle and associated with a first provider identifier. As illustrated, the first user interface 750 depicts selection of signal interface parameter 712, for example that represents the first provider identifier. It will be appreciated that the signal interface parameter 712 may be depicted anywhere int he first user interface 750, for example in the top-down coverage map 702 and/or vertical profile coverage map 704.

The first user interface 750 and second user interface 760 each include distinct sub-interfaces corresponding to different perspectives of a particular environment, for example as depicted and described with respect to FIG. 6. Specifically, the first user interface 750 includes a top-down coverage map 702 and vertical profile coverage map 704, and the second user interface 760 includes top-down coverage map 716 and vertical profile coverage map 718. The perspectives of these sub-interfaces correspond to the similarly named sub-interfaces depicted and described with respect to FIG. 6, and therefore repeated disclosure is omitted for brevity and clarity.

The top-down coverage map 702 includes a representation of a flight plan 714. The representation of the flight plan 714 depicts the travel plan to be followed by a particular vehicle throughout the vehicle. A vertical profile representation of the same flight plan, for example corresponding to the representation of the flight plan 714, is depicted in the vertical profile coverage map 704 as the representation of the flight plan 710.

As illustrated, each sub-interface includes a depiction of various coverage areas in the environment. The coverage areas represent different signal strengths at different locations throughout the environment. Specifically, FIG. 7 depicts a plurality of top-down coverage areas 706. In some embodiments, the top-down coverage areas 706 correspond to signal strengths generated or otherwise determined based at least in part on signal propagations modeled as depicted and described herein by one or more models, for example signal model 506 as depicted and described with respect to FIG. 5. As illustrated, the top-down coverage areas 706 are depicted as concentric circles including an inner circle defining locations associated with a first range of signal strengths (e.g., above a certain upper threshold) and an outer circle defining locations associated with a second range of signal strengths (e.g., signal strengths above a lower threshold sufficient to communicate signals of a particular signal type but less than the certain upper threshold). In some embodiments, each coverage area of the top-down coverage areas 706 corresponds to a distinct signal handling entity that is responsible for communication of signals of at least one signal type, such that the coverage area is based at least in part on the configuration of the signal handling entity and/or other factors associated with the environment that impact signal strength at one or more locations of the environment. Additionally or alternatively, in some embodiments, at least one coverage area represents signal strengths associated with a plurality of signal handling entities.

The first user interface 750 is usable by a user, or alternatively processable by a system, to discern one or more areas that lack any signal strength or sufficient signal strength to enable communications at one or more locations throughout the environment. Such a lack of signal strength may be determined at coordinates along a top-down, or x-y, plane of the environment. Specifically, as illustrated, in a circumstance where a flight plan is indicated as travelling through a location that does not intersect any of the top-down coverage areas 706, then the location is associated with no signal strength or insufficient signal strength (e.g., below a certain threshold) determined sufficient for communication over the communications network corresponding to the signal interface parameter 712. In this regard, such locations may embody a dead zone area or plurality of dead zone areas within the environment. It should be appreciated that any number of dead zone areas may be identified within an environment based at least in part on rendered top-down coverage areas 706 and a corresponding flight plan depicted via a representation of the flight plan 714.

In certain contexts, such as air travel, however, a two-dimensional analysis of signal strength may be insufficient. For example, with respect to air travel, signal strengths not only at two-dimensional positions across a single plane (e.g., at ground level) may have a deficit, but signal strengths may also differ at different heights (e.g., z-locations) within the environment. In this regard, the vertical profile coverage map 704 provides additional situational awareness based on locations at different heights that may be associated with distinct signal strengths.

As illustrated, the vertical profile coverage map 704 includes vertical coverage areas 708. In some embodiments, the vertical coverage areas 708 correspond to the same coverage areas depicted as top-down coverage areas 706 in the top-down coverage map 702, but from the second perspective (e.g., a side profile view of the x-z plane). In this regard, the signal strengths may radiate upwards from the signal handling entity or signal handling entities at a particular angle, forming a cone shape coverage area as the altitude in the environment increases. As depicted, each vertical coverage area of the vertical coverage areas 708 are depicted as concentric inner regions and outer regions, where the inner region defines locations associated with a first range of signal strengths (e.g., above a certain upper threshold) and the outer region defines locations associated with a second range of signal strengths (e.g., signal strengths above a lower threshold sufficient to communicate signals of a particular signal type but less than the certain upper threshold). It should be appreciated that, in some embodiments, the inner region corresponds to the inner circle of the corresponding top-down coverage area of the top-down coverage areas 706, and the outer region corresponds to the outer circle of the corresponding top-down coverage area of the top-down coverage areas 706, depicted from the second perspective.

The second representation of the flight plan 710 is similarly depicted in the vertical profile coverage map 704 representing locations that to be traveled throughout the depicted environment. In this regard, in a circumstance where the flight plan is indicated as traveling through a location that does not intersect with any of the vertical coverage areas 708, then the location is associated with no signal strength or insufficient signal strength (e.g., below a certain threshold) determined sufficient for communication over the communications network corresponding to the signal interface parameter 712. In this regard, such locations may embody a dead zone area or plurality of dead zone areas within the environment. It should be appreciated that, a dead zone area may be formed by failing to overlap any one of the coverage areas. For example, failure to overlap one of the top-down coverage areas 706 indicates a dead zone area that does not have signal strength at a location on the x-y plane of the environment, and failure to overlap one of the vertical coverage areas 708 indicates a dead zone area that does not have signal strength at a location at a particular altitude on the x-z plane of the environment.

The second user interface 760 depicts the user interface 700 as updated upon changing from selection of the signal interface parameter 712 to selection of the signal interface parameter 728. The signal interface parameter 728 represents a second provider identifier, for example corresponding to one or more signal handling entities that form a second communications network. In this regard, it should be appreciated that the signal interface parameter 728 may be associated with one or more distinct coverage areas based at least in part on the signal handling entities associated with the corresponding updated provider identifier.

In this regard, the second user interface 760 includes top-down coverage map 716. The top-down coverage map 716 includes a second representation of the flight plan 720. The second representation of the flight plan 720 corresponds to the representation of the flight plan 714 as depicted and described with respect to the top-down coverage map 702. In this regard, it should be appreciated that the flight plan associated with a particular vehicle is not updated by selection of a distinct signal interface parameter.

The top-down coverage map 716 further includes top-down coverage areas 722. Each of the top-down coverage areas 722 in some embodiments is similarly configured as the top-down coverage areas 706 as depicted and described. For example, in some embodiments, the top-down coverage areas 722 are associated with signal strengths facilitated by signal handling entities associated with the second provider identifier corresponding to the signal interface parameter 728. In this regard, it will be appreciated that the locations that fall within the top-down coverage areas 722 may differ from the locations that fall within the top-down coverage areas 706.

Similarly, the second user interface 760 further includes a vertical profile coverage map 718 that includes vertical coverage areas 724. Each of the vertical coverage areas 724 in some embodiments is similarly configured as the vertical coverage areas 708 as depicted and described. For example, in some embodiments, the vertical coverage areas 724 are associated with the signal strengths from the second perspective, for example considering altitude along an x-z plane, as facilitated by the same signal handling entities. In this regard, the top-down coverage map 716 and vertical coverage areas 724 provide the same analytical view with respect to the signal strengths facilitated by the signal handling entities associated with the second provider identifier corresponding to the signal interface parameter 728 as the top-down coverage map 702 and vertical profile coverage map 704 provide with respect to the signal strengths facilitated by the signal handling entities associated with the first provider identifier corresponding to the signal interface parameter 728.

The distinctions in the locations within the depicted coverage areas are determinable based at least in part on the top-down coverage map 716 and/or vertical coverage areas 724. For example, as illustrated, the second user interface 760 indicates that the flight plan corresponding to representations of the flight plan 714, 710, 720, and 726, traverses through more dead zone areas associated with the communications network corresponding to the provider identifier associated with the signal interface parameter 712 as compared to the communications network corresponding to the provider identifier associated with the signal interface parameter 728. As depicted in the second user interface 760, after an initial period lacking connectivity, the flight plan does not traverse any dead zone areas for the communications network corresponding to provider identifier associated with the signal interface parameter 728. In this regard, the second communications network corresponding to the provider identifier associated with the signal interface parameter 728 may be selected for use to avoid periods of loss in communication with the vehicle.

Additionally or alternatively, in some embodiments, an optimal network is selected. In some embodiments, the optimal network is selected to minimize dead zone areas that are traveled through via a particular flight plan. Additionally or alternatively, in some embodiments, one or more additional parameters are considered in selecting an optimal network. For example, in some embodiments, an optimal network is selected based at least in part on a cost associated with utilizing a particular communications network corresponding to a particular provider identifier.

In some embodiments, a user may utilize the user interface 700, or an alternative companion user interface, to update a travel plan, such as the flight plan, associated with the vehicle. For example, in some embodiments, the user may utilize the user interface to update one or more legs or phases of the flight to avoid one or more identified dead zone areas within the environment. In this regard, the user or the system may generate an updated proposed travel plan. The updated proposed travel plan in some embodiments is rendered to the same user interface, and may be rendered alone or together with the current travel plan assigned to the vehicle. In some embodiments, the user or the system may accept an updated proposed travel plan to assign the updated proposed travel plan as the current travel plan for the vehicle, replacing the currently assigned travel plan.

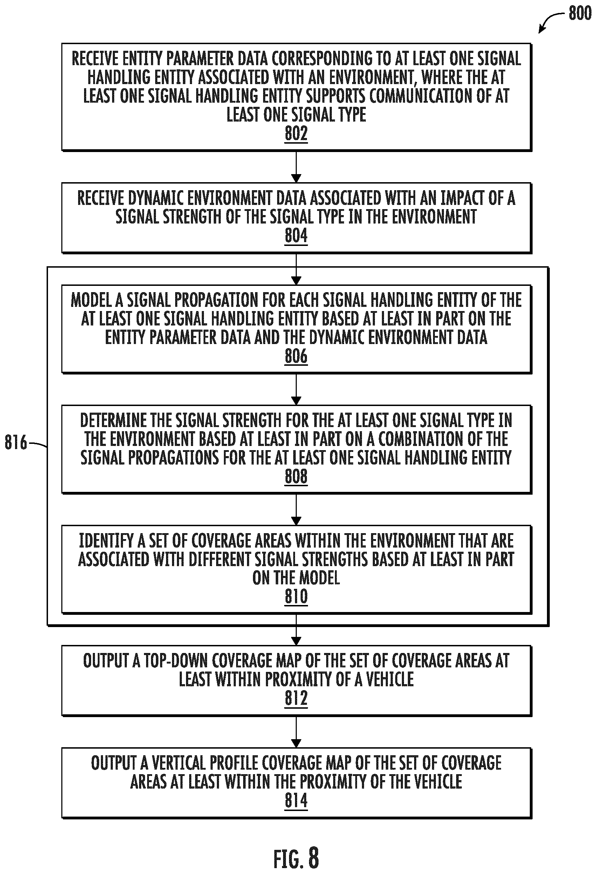

FIG. 8 illustrates a flowchart including example operations of a process for outputting modeled signal strengths via a user interface in accordance with at least one example embodiment of the present disclosure. Specifically, FIG. 8 illustrates an example process 800. Although the example process 800 depicts a particular sequence of operations, the sequence may be altered without departing from the scope of the present disclosure. For example, some of the operations depicted may be performed in parallel or in a different sequence that does not materially affect the function of the process 800. In other examples, different components of an example device or system that implements the process 800 may perform functions at the same time or substantially the same time, or in a specific sequence.

The blocks indicate operations of each process. Such operations may be performed in any of several ways, including, without limitation, in the order and manner as depicted and described herein. In some embodiments, one or more blocks of any of the processes described herein occur in between one or more blocks of another process, before one or more blocks of another process, in parallel with one or more blocks of another process, and/or as a sub-process of a second process. Additionally, or alternatively, any of the processes in various embodiments include some or all operational steps described and/or depicted, including one or more optional blocks in some embodiments. With regard to the flowcharts illustrated herein, one or more of the depicted blocks are optional in some, or all, embodiments of the disclosure. Optional blocks are depicted with broken (or "dashed") lines. Similarly, it should be appreciated that one or more of the operations of each flowchart may be combinable, replaceable, and/or otherwise altered as described herein.

The process 800 embodies an example computer-implemented method. In some embodiments, the process 800 is embodied by computer program code stored on a non-transitory computer-readable storage medium of a computer program product configured for execution to perform the process as depicted and described. Alternatively, or additionally, in some embodiments, the process 800 is performed by one or more specially configured computing devices, such as the specially configured servers and/or apparatuses depicted and/or described herein alone or in communication with one or more other component(s), device(s), system(s), and/or the like. In this regard, in some such embodiments, such that at least one computing device is specially configured by computer-coded instructions (e.g., computer program instructions) stored thereon, for example in a memory element and/or another component depicted and/or described herein and/or otherwise accessible to the computing device, for performing the operations as depicted and described. In some embodiments, the computing device is in communication with one or more external apparatus(es), system(s), device(s), and/or the like, to perform one or more of the operations as depicted and described. In some embodiments, the computing device is in communication with separate component(s) of a network, external network(s), and/or the like, to perform one or more of the operations as depicted and described. For purposes of simplifying the description, the process 800 is described as performed by and from the perspective of a specially configured apparatus, for example the apparatus 200 as depicted and described herein.

According to some examples, the method includes receiving entity parameter data corresponding to at least one signal handling entity associated with an environment at operation 802. The at least one signal handling entity in some embodiments supports communication of at least one signal type. In some embodiments, each signal handling entity is associated with maintaining or otherwise operating a portion of a communications network associated with a particular signal type, for one or more signal types. For example, in some embodiments, a signal handling entity embodies a computing system that includes hardware, software, firmware, and/or the like, that embodies a tower of a cellular communications network that transmits and/or receives wireless cellular communications (embodying a cellular signal type). Additionally or alternatively, in some embodiments, the same single handling entity or another signal handling entity includes a computing system that includes hardware, software, firmware, and/or the like, that embodies a satellite of a satellite communications network that transmits and/or receives satellite communications (embodying a satellite signal type). It should be appreciated that a single handling entity may be associated with systems that transmit and/or receive a plurality of signal types.

According to some examples, the method includes receiving dynamic environment data associated with an impact of a signal strength of the signal type in the environment at operation 804. In some embodiments, the dynamic environment data is received from one or more sensors, systems, and/or the like that are permanently or temporarily within the environment at a particular timestamp. For example, in some embodiments, the dynamic environment data includes sensor data from fixed weather sensors in the environment, camera systems in the environment, and/or the like that provide data on a real-time basis or for storage to a database and subsequent retrieval. Additionally or alternatively still, in some embodiments, the dynamic environment data includes data derivable or otherwise received associated with operations of vehicles in the environment. For example, in some embodiments the dynamic environment data includes traffic data and/or travel plans associated with vehicles that are in the environment and/or will be in the environment throughout the travel plan. It will be appreciated that the dynamic environment data may include any data that a particular computing system may receive, derive, retrieve, calculate, and/or otherwise identify where such data impacts operation of a vehicle or multiple vehicles when such a vehicle is within the environment or will be in the environment.

In some embodiments, the process 800 includes generating a model of signal strength in an environment for the at least one signal type. In some embodiments, the model of signal strength embodies one or more data objects that represent a simulated version of the environment and/or signal strengths for signals of one or more particular signal types within the environment. In this regard, embodiments utilize the data associated with a combination of signal handling entities, alone and/or in combination with one or more portions of the dynamic environment data, to model the signal strengths of particular signal types facilitated by any one of the signal handling entities or the combination thereof. In some embodiments, the subprocess for generating a model of signal strength in an environment for the at least one signal type is embodied by the modeling steps 816, including at least operation 806, operation 808, and/or operation 810, as depicted and described.

According to some examples, the method includes modeling a signal propagation for each signal handling entity of the at least one signal handling entity based at least in part on the entity parameter data and the dynamic environment data at operation 806. The modeled signal propagation for a particular signal type in some embodiments represents a signal strength of the particular signal type at different locations within an environment. In this regard, signals of the particular signal type may be received and/or transmitted, for example from a vehicle and/or to a vehicle, in the environment in accordance with the signal strength. In some embodiments, the signal propagation corresponding to a particular signal handling entity is based at least in part on the entity parameter data corresponding to that signal handling entity indicating capabilities of the hardware, software, firmware, and/or the like that generates and/or receives signals of a particular signal type. In some embodiments, a signal propagation for a particular signal handling entity, or at least one signal propagation for a plurality of signal handling entities is modeled utilizing any of a myriad of known signal modeling software applications, mathematical formulas, and/or the like for propagation of data waves embodying such signals across an environment having particular characteristics represented in one or more portions of entity parameter data and/or the dynamic environment data.

In some embodiments, the signal propagation represents a signal strength at a particular three-dimensional location within the environment. In this regard, the signal propagation may represent different signal strengths at different vertical positions above a particular ground location (e.g., represented by an x, y coordinate). Similarly, different horizontal positions (e.g., represented by an x, y coordinate) at the same vertical position (e.g., represented by a z coordinate) may be associated with different signal strengths. In this regard, it should be appreciated that some locations may have no signal strength at a particular location, and a location above that particular location may have a non-zero signal strength and/or otherwise a comparatively improved signal strength.

One such example context where signal strengths generally improve with an increase in elevation is in signal communications between aerial vehicles and ground stations that communicate utilizing communications network that function based at least in part on ground-based tower systems. In some such contexts, ground-based tower systems support signal communication with a particular angle beginning at the antenna and/or supporting hardware of the ground-based tower system and expanding upwards. In this regard, the signal strength represented in the signal propagation is likely to be available over a wider horizontal area as the elevation from the ground-based tower system increases, with little to no signal strength below or laterally adjacent to the hardware of the ground-based tower system configured to perform signal communication.

According to some examples, the method includes determining the signal strength for the at least one signal type in the environment based at least in part on a combination of the signal propagations for the at least one signal handling entity at operation 808. In some embodiments, the signal propagations associated with a particular signal type and corresponding to a plurality of signal handling entities combines to result in an altered signal propagation. The altered signal propagation may be stronger or weaker in signal strength than the individual signal propagations of the signal handling entities, for example based at least in part on interactions between the various signal propagations corresponding to the signal handling entities. In circumstances where different signal propagations of the same signal type interfere, for example, signal strength for that particular signal type may be determined weaker at a particular location in the environment. Additionally or alternatively, in some embodiments, the signal strength for at least one signal type is further based at least in part on one or more portions of dynamic environment data associated with the environment, for example in circumstances where details associated with the environment and/or other elements operating within the environment affect the interactions between multiple signal propagations of the same signal type. In some embodiments, the signal propagations corresponding to various signal handling entities do not interact, such that determining the signal strength for the at least one signal type in the environment based at least in part on a combination of the signal propagations for the at least one signal handling entity is optional.

According to some examples, the method includes identifying a set of coverage areas within the environment that are associated with different signal strengths based at least in part on the model at operation 810. The set of coverage area includes any number of coverage areas. In some embodiments, a particular coverage area defines a geofence or other defined set of locations within which a signal strength of a particular signal type is equal to a certain value or falls within a particular range of values. In some embodiments, different coverage areas may be associated with different values or range of values. For example, in some embodiments, a first range of values representing various signal strengths may define a high-strength coverage area, whereas a second range of values representing various signal strengths that are lower than the first range of values may define a medium-strength coverage area, and a third range of values representing various signal strengths that are lower than the second range of values may define a low-strength coverage area. It will be appreciated that coverage areas may be constructed representing any number of delineations between signal strengths. In some embodiments, a coverage area is defined by an exact representation of the area having the particular signal strength. In other embodiments, a coverage area is defined by an approximation or other representation of the area (e.g., a circle with approximate boundaries near a boundary of a value for signal strength between coverage areas. Such areas may be defined based at least in part on particular locations in the environment, for example where the locations are defined in a three-dimensional space within the environment (e.g., based at least in part on an x, y, z coordinate tuple). In this regard, it will be appreciated that a coverage area may be represented having a particular three-dimensional volume, such that signal strength at a particular height from a ground level in the environment may differ at the same x, y coordinate within the environment. Additionally or alternatively, in some embodiments, a coverage area indicates any location where signal strength of a particular signal type is above a certain threshold that indicates sufficient signal strength for data communication of the particular signal type.

It should be appreciated that in some embodiments, any number of coverage areas may be determined for different signal types. For example, a first signal type may be associated with a first set of coverage areas that represents different signal strengths of the first signal type at various locations in the environment, and a second signal type may be associated with a second set of coverage areas that represents different signal strengths of the second signal type at the various locations in the environment. In this regard, the first set of coverage areas may indicate sufficient signal strength or good signal strength for data transmission of the first signal type at distinct locations than the second set of coverage areas may indicate sufficient signal strength or good signal strength for data transmission of the second signal type. Such modeling and determination may be determined for any number of signal types.

Additionally or alternatively, in some embodiments, any number of coverage areas may be associated with any of a myriad of other parameters utilized in defining a particular coverage area. For example, in some embodiments, a set of coverage areas is determined where each coverage area is associated with a parameter defining the signal type associated with the coverage area, a parameter defining a provider identifier corresponding to an entity that controls, owns, or otherwise operates the systems that facilitate communication of the signal type corresponding to the coverage area, a parameter defining the signal handling entity and/or signal handling entities that contribute to the signal strength in the particular area of the environment, and/or the like. Such data parameters may be determined, received, and/or derived based at least in part on any one portion or combination of portions of entity parameter data and/or dynamic environment data. In some embodiments, each data parameter or at least a portion of the data parameters each represent a signal interface parameter that may be utilized to configure a particular user interface to display only particular coverage areas as depicted and described further herein.

In some embodiments, the modeling steps 816 may be repeated any number of times. For example, in some embodiments, the model is updated at regularly scheduled intervals after expiration of a particular timestamp interval. Additionally or alternatively in some embodiments the model is updated in accordance with one or more data-driven trigger events. For example, in some embodiments, the model is updated upon receiving user input requesting the update. Additionally or alternatively, in some embodiments, the model is updated upon receiving of new dynamic environment data.

According to some examples, the method includes outputting a top-down coverage map of the set of coverage areas at least within proximity of a vehicle at operation 812. In some embodiments, the top-down coverage map is outputted via rendering to a particular user interface. In this regard, the top-down coverage map depicts, from a first perspective, the signal strengths at various locations in the environment. Specifically, the top-down coverage map may depict a first perspective of the various coverage areas representing the signal strengths at different locations in the environment. In some embodiments, the top-down coverage map includes depictions of one or more of the coverage areas representing the signal strengths at various locations in the environment, each location having the same elevation. In some embodiments, the top-down coverage map is rendered to a first sub-interface of the user interface, for example where the user interface includes a second sub-interface embodying the vertical profile coverage map as depicted and described herein. Additionally or alternatively, in some embodiments, the top-down coverage map is rendered to a separate user interface rendered on a distinct display (e.g., a primary flight display).

According to some examples, the method includes outputting a vertical profile coverage map of the set of coverage areas at least within the proximity of the vehicle at operation 814. In some embodiments, the vertical profile coverage map is outputted via rendering to a particular user interface. In this regard, the vertical profile coverage map depicts, from a second perspective, the signal strengths at various locations in the environment. Specifically, the vertical profile coverage map may depict a second perspective of the various coverage areas representing the signal strengths at different locations in the environment. In some embodiments, the vertical profile coverage map includes depictions of one or more of the coverage areas representing the signal strengths at various locations in the environment, each location depicted from a side-profile view (e.g., having the same position in at least one horizontal direction, with varying elevations depicted). In various embodiment, the vertical profile coverage map includes depictions of one or more of the coverage areas representing the signal strengths at a selected altitude. For example, and as will be appreciated in light of the present disclosure, for various types of signal handling entities 108, such as cell towers, the signal coverage at 500 feet will be different than the signal coverage at 1,000 feet. The vertical provile coverage map may depict the one or more of the coverage areas based at least in part on the selected altitude. The selected altitude may be selected by a user of the graphical user interface. In some embodiments, the vertical profile coverage map is rendered to a second sub-interface of the user interface, for example where the user interface includes a first sub-interface embodying the top-down coverage map. Additionally or alternatively, in some embodiments, the vertical profile coverage map is rendered to a separate user interface, for example where the vertical profile coverage map is rendered to a separate user interface rendered on a distinct display (e.g., a secondary flight display).

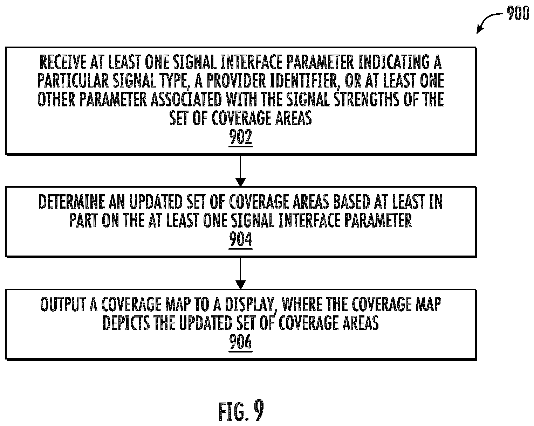

FIG. 9 illustrates a flowchart including example operations of a process for outputting a coverage map based at least in part on a signal interface parameter in accordance with at least one example embodiment of the present disclosure. Specifically, FIG. 9 illustrates an example process 900. Although the example process 900 depicts a particular sequence of operations, the sequence may be altered without departing from the scope of the present disclosure. For example, some of the operations depicted may be performed in parallel or in a different sequence that does not materially affect the function of the process 900. In other examples, different components of an example device or system that implements the process 900 may perform functions at the same time or substantially the same time, or in a specific sequence.

The process 900 embodies an example computer-implemented method. In some embodiments, the process 900 is embodied by computer program code stored on a non-transitory computer-readable storage medium of a computer program product configured for execution to perform the process as depicted and described. Alternatively, or additionally, in some embodiments, the process 900 is performed by one or more specially configured computing devices, such as the specially configured servers and/or apparatuses depicted and/or described herein alone or in communication with one or more other component(s), device(s), system(s), and/or the like. In this regard, in some such embodiments, such that at least one computing device is specially configured by computer-coded instructions (e.g., computer program instructions) stored thereon, for example in a memory element and/or another component depicted and/or described herein and/or otherwise accessible to the computing device, for performing the operations as depicted and described. In some embodiments, the computing device is in communication with one or more external apparatus(es), system(s), device(s), and/or the like, to perform one or more of the operations as depicted and described. In some embodiments, the computing device is in communication with separate component(s) of a network, external network(s), and/or the like, to perform one or more of the operations as depicted and described. For purposes of simplifying the description, the process 900 is described as performed by and from the perspective of a specially configured apparatus, for example the apparatus 200 as depicted and described herein.

In some embodiments, one or more of the operations illustrated with respect to FIG. 9 occurs additional to, and/or in place of, one or more operations of another process. For example, as depicted, in some embodiments FIG. 9 begins after operation 814 as depicted and described with respect to FIG. 8. Additionally or alternatively, as depicted, in some embodiments upon completion of the operations depicted with respect to FIG. 9, flow returns to FIG. 8 or the flow ends as depicted and described. It should be appreciated that, in other embodiments, one or more other processes and/or subprocesses may begin after one or more of the operations depicted and described with respect to FIG. 9, and/or upon completion of the operations depicted and described with respect to FIG. 9.

According to some examples, the method includes receiving at least one signal interface parameter at operation 902. In some embodiments, the at least one signal interface parameter is received in response to user input via a particular user interface. For example, in some embodiments a user interface includes one or more interface elements specially configured to receive a value representing a particular signal interface parameter, where the signal interface parameter may be selected from a possible set of values (e.g., via a drop-down control or other preset set of selectable values) or inputted via text or another dynamic control (e.g., via text inputted by a user). Additionally or alternatively, in some embodiments, at least one signal interface parameter is received via communication from another system. Additionally or alternatively still, in some embodiments, at least one signal interface parameter is determined or otherwise identified automatically, algorithmically, or predetermined based at least in part on one or more default or previous selections.

According to some examples, the method includes determining an updated set of coverage areas based at least in part on the at least one signal interface parameter at operation 904. In some embodiments, a signal interface parameter indicates a particular data value utilized to alter the set of coverage areas rendered to one or more user interfaces. For example, in some embodiments, the at least one signal interface parameter indicates a particular signal type, a provider identifier, or at least one other parameter associated with the signal strengths of the set of coverage areas. Some embodiments cause rendering only of representations of coverage areas corresponding to at least one signal interface parameter. For example, in circumstances where a particular signal interface parameter is received indicating a particular signal type, one or more user interfaces including a top-down coverage map and/or vertical profile coverage map may be updated to depict coverage areas corresponding only to communications networks that are capable of handling the particular signal type, where other coverage areas corresponding to other communications networks may not be rendered or otherwise hidden from the user interface. Similarly, in circumstances where a particular signal interface parameter is received indicating a particular provider identifier, one or more user interfaces including a top-down coverage map and/or vertical profile coverage map may be updated to depict coverage areas corresponding only to communications networks that are owned by, operated by, and/or otherwise controlled by, the provider represented by the particular provider identifier, where other coverage areas corresponding to communications networks associated with other providers represented by other provider identifiers may not be rendered or otherwise hidden from the user interface. Similarly, in circumstances where a particular signal interface parameter is received indicating a particular bandwidth or signal strength value, one or more user interfaces including a top-down coverage map and/or vertical profile coverage map may be updated to depict coverage areas corresponding only to signal strengths above a particular threshold value indicated by the particular bandwidth or signal strength value. In this regard, a signal interface parameter or combination of signal interface parameters may be utilized to select an updated set of coverage areas representing particular coverage areas to render corresponding representations and other coverage areas to not render corresponding representations.

According to some examples, the method includes outputting a coverage map to a display, where the coverage map depicts the updated set of coverage areas at operation 906. In some embodiments, the user interface is rendered including a top-down coverage map and/or a vertical profile coverage map depicting representations of the updated set of coverage areas. In this regard, it should be appreciated that the at least one coverage map (e.g., the top-down coverage map and/or the vertical profile coverage map) may include any number of representations of coverage areas distinct from the previously-depicted coverage areas.

It should be appreciated that the process 900 may be repeated any number of times. For example, in this regard, a user may update signal interface parameters any number of times to depict coverage areas of different communications networks being considered for connection. The user may utilize such signal interface parameters to investigate different communications networks to which to connect to ensure continuous communication capabilities and/or determine an optimal network to which to connect.

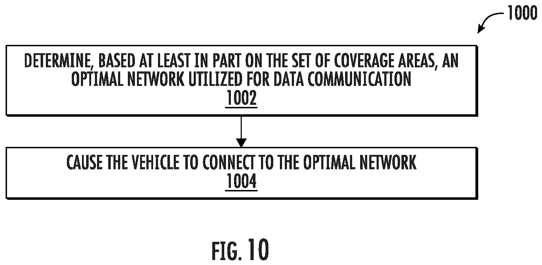

FIG. 10 illustrates a flowchart including example operations of a process for selecting an optimal network in accordance with at least one example embodiment of the present disclosure. Specifically, FIG. 10 illustrates an example process 1000. Although the example process 1000 depicts a particular sequence of operations, the sequence may be altered without departing from the scope of the present disclosure. For example, some of the operations depicted may be performed in parallel or in a different sequence that does not materially affect the function of the process 1000. In other examples, different components of an example device or system that implements the process 1000 may perform functions at the same time or substantially the same time, or in a specific sequence.

The process 1000 embodies an example computer-implemented method. In some embodiments, the process 1000 is embodied by computer program code stored on a non-transitory computer-readable storage medium of a computer program product configured for execution to perform the process as depicted and described. Alternatively, or additionally, in some embodiments, the process 1000 is performed by one or more specially configured computing devices, such as the specially configured servers and/or apparatuses depicted and/or described herein alone or in communication with one or more other component(s), device(s), system(s), and/or the like. In this regard, in some such embodiments, such that at least one computing device is specially configured by computer-coded instructions (e.g., computer program instructions) stored thereon, for example in a memory element and/or another component depicted and/or described herein and/or otherwise accessible to the computing device, for performing the operations as depicted and described. In some embodiments, the computing device is in communication with one or more external apparatus(es), system(s), device(s), and/or the like, to perform one or more of the operations as depicted and described. In some embodiments, the computing device is in communication with separate component(s) of a network, external network(s), and/or the like, to perform one or more of the operations as depicted and described. For purposes of simplifying the description, the process 1000 is described as performed by and from the perspective of a specially configured apparatus, for example the apparatus 200 as depicted and described herein.

In some embodiments, one or more of the operations illustrated with respect to FIG. 10 occurs additional to, and/or in place of, one or more operations of another process. For example, as depicted, in some embodiments FIG. 10 begins after operation 814 as depicted and described with respect to FIG. 8. Additionally or alternatively, as depicted, in some embodiments upon completion of the operations depicted with respect to FIG. 10, flow returns to FIG. 8 or the flow ends as depicted and described. It should be appreciated that, in other embodiments, one or more other processes and/or subprocesses may begin after one or more of the operations depicted and described with respect to FIG. 10, and/or upon completion of the operations depicted and described with respect to FIG. 10.

According to some examples, the method includes determining, based at least in part on the set of coverage areas, an optimal network utilized for data communication at operation 1002. In some embodiments, the optimal network is selected from a plurality of distinct communications networks that are associated with different provider identifiers, and that may each facilitate communication of transmissions via one or more signal types. Some embodiments process the set of coverage areas to determine a signal type and/or communications network of one or more signal types that are associated with coverage areas that have a non-zero signal strength or otherwise a signal strength that satisfies a particular threshold at each location along a particular travel plan. In this regard, such embodiments may utilize the coverage areas to determine each signal type and/or communications network of a particular signal type or multiple signal types that ensures the vehicle remains capable of communicating transmissions with at least one signal type, and/or a plurality of signal types.

In some embodiments, a plurality of communications networks may be determined to provide sufficient signal strength along a particular travel plan, such that the optimal network is to be selected from between the plurality of communications networks. Some such embodiments process one or more additional parameters associated with each communications network to determine which to select. For example, in some embodiments, each communications network is associated with additional parameter data representing a maximum bandwidth, transmission speed, cost per use, and/or the like. Some such embodiments process such additional parameter data to determine a communications network that maximizes or minimizes a particular additional parameter along the locations represented in the travel plan, or maximizes or minimizes a particular combination of additional parameters. In some such embodiments, the communications network determined based at least in part on the maximization and/or minimization is selected as the optimal network.

According to some examples, the method includes causing the vehicle to connect to the optimal network at operation 1004. Some embodiments transmit data identifying or otherwise indicating the optimal network to the vehicle to trigger the vehicle to connect to the optimal network. Additionally or alternatively, some embodiments cause rendering of a particular user interface indicating the optimal network to enable connection to the optimal network automatically or in response to user input provided via the user interface. Once connected, the vehicle may utilize the optimal network to transmit any number of communication via a particular signal type communicable via the communications network.

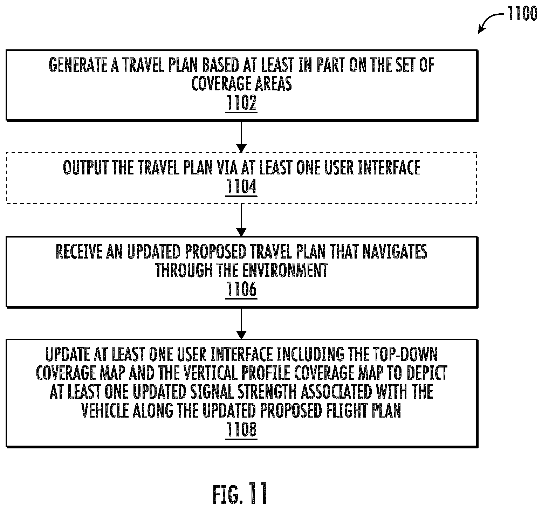

FIG. 11 illustrates a flowchart including example operations of a process for depicting an updated proposed travel plan in accordance with at least one example embodiment of the present disclosure. Specifically, FIG. 11 illustrates an example process 1100. Although the example process 1100 depicts a particular sequence of operations, the sequence may be altered without departing from the scope of the present disclosure. For example, some of the operations depicted may be performed in parallel or in a different sequence that does not materially affect the function of the process 1100. In other examples, different components of an example device or system that implements the process 1100 may perform functions at the same time or substantially the same time, or in a specific sequence.

The process 1100 embodies an example computer-implemented method. In some embodiments, the process 1100 is embodied by computer program code stored on a non-transitory computer-readable storage medium of a computer program product configured for execution to perform the process as depicted and described. Alternatively, or additionally, in some embodiments, the process 1100 is performed by one or more specially configured computing devices, such as the specially configured servers and/or apparatuses depicted and/or described herein alone or in communication with one or more other component(s), device(s), system(s), and/or the like. In this regard, in some such embodiments, such that at least one computing device is specially configured by computer-coded instructions (e.g., computer program instructions) stored thereon, for example in a memory element and/or another component depicted and/or described herein and/or otherwise accessible to the computing device, for performing the operations as depicted and described. In some embodiments, the computing device is in communication with one or more external apparatus(es), system(s), device(s), and/or the like, to perform one or more of the operations as depicted and described. In some embodiments, the computing device is in communication with separate component(s) of a network, external network(s), and/or the like, to perform one or more of the operations as depicted and described. For purposes of simplifying the description, the process 1100 is described as performed by and from the perspective of a specially configured apparatus, for example the apparatus 200 as depicted and described herein.

In some embodiments, one or more of the operations illustrated with respect to FIG. 11 occurs additional to, and/or in place of, one or more operations of another process. For example, as depicted, in some embodiments FIG. 11 begins after operation 814 as depicted and described with respect to FIG. 8. Additionally or alternatively, as depicted, in some embodiments upon completion of the operations depicted with respect to FIG. 11, flow returns to FIG. 8 or the flow ends as depicted and described. It should be appreciated that, in other embodiments, one or more other processes and/or subprocesses may begin after one or more of the operations depicted and described with respect to FIG. 11, and/or upon completion of the operations depicted and described with respect to FIG. 11.

According to some examples, the method includes generating a travel plan based at least in part on the set of coverage areas at operation 1102. In some embodiments, the travel plan is generated such that a vehicle maintains sufficient signal strength at each location along the travel plan. In this regard, embodiments may identify a path of contiguous locations in the environment, where each location is associated with a non-zero signal strength of at least one signal type, and/or otherwise is associated with a signal strength for at least one signal type that exceeds a particular threshold. In some embodiments, the path is generated such that the signal strength is maintained for a particular signal type, and in other embodies is generated such that the signal strength of a particular signal type may fall below a particular threshold so long as another signal type is associated with a signal strength above the particular threshold at each location along the path.

According to some examples, the method includes outputting the travel plan via at least one user interface at optional operation 1104. In some embodiments, the travel plan is rendered together with a depiction of the environment, for example such that the travel plan is depicted within a representation of an environment itself (e.g., based on satellite imagery and/or other representations thereof). In some embodiments, the travel plan is depicted within one or more coverage maps, for example a top-down coverage map and/or a vertical profile coverage map of an environment. In this regard, the top-down coverage map and/or vertical profile coverage map in some embodiments depicts the coverage areas that are along of otherwise within a particular threshold distance from one or more locations along the travel plan. The rendered representation of the travel plan may be analyzed and/or otherwise utilized be an operator or other controller of the vehicle to plan, perform, and/or alter navigation the vehicle throughout the environment.

According to some examples, the method includes receiving an updated proposed travel plan that navigates through the environment at operation 1106. In some embodiments, the updated proposed travel plan is received in response to user input provided via one or more user interfaces. In some embodiments, the user input is received in response to interaction with the user interface in which at least one representation of the travel plan is provided. The user input in some embodiments represents an indication of updating a waypoint within which the vehicle is to travel, an area within an environment that a vehicle is to avoid, a constraint to be applied to operation of the vehicle, and/or the like. In some embodiments, the updated proposed travel plan is automatically generated in response to the user input from a user or other received data. The updated proposed travel plan may differ from the previous travel path by indicating the vehicle is to traverse along one or more distinct locations within the environment.

According to some examples, the method includes updating at least one user interface including the top-down coverage map and the vertical profile coverage map to depict at least one updated signal strength associated with the vehicle along the updated proposed travel plan at operation 1108. In some embodiments, the top-down coverage map and/or the vertical profile coverage map updates to depict coverage areas that overlap at least one location along the updated proposed travel plan. In other embodiments, the top-down coverage map and/or the vertical profile coverage map updates to depict coverage areas that are within at least a threshold distance from at least one location along the updated proposed travel plan. In this regard, the coverage areas depicted via the top-down coverage map and/or vertical profile coverage map in some embodiments are dynamically updated to depict representations of the coverage areas that are relevant for consideration as within close proximity to the updated proposed travel plan for the vehicle. A user in some embodiments may determine whether to accept the updated proposed travel plan to set it as the current travel plan for the vehicle, reject the updated proposed travel plan, or further update the updated proposed travel plan. Additionally or alternatively, the user may utilize such a user interface to analyze the impact of such updates to a travel plan with respect to signal strength of one or more signal types for communication at the various locations along the updated proposed travel plan as such updates are performed.

### CONCLUSION

Although an example processing system has been described above, implementations of the subject matter and the functional operations described herein can be implemented in other types of digital electronic circuitry, or in computer software, firmware, or hardware, including the structures disclosed in this specification and their structural equivalents, or in combinations of one or more of them.

Embodiments of the subject matter and the operations described herein can be implemented in digital electronic circuitry, or in computer software, firmware, or hardware, including the structures disclosed in this specification and their structural equivalents, or in combinations of one or more of them. Embodiments of the subject matter described herein can be implemented as one or more computer programs, i.e., one or more modules of computer program instructions, encoded on at least one computer storage medium for execution by, or to control the operation of, the data processing apparatus. Alternatively, or in addition, the program instructions can be encoded on an artificially-generated propagated signal, e.g., a machine-generated electrical, optical, or electromagnetic signal, which is generated to encode information/data for transmission to suitable receiver apparatus for execution by an information/data processing apparatus. A computer storage medium can be, or be included in, a computer-readable storage device, a computer-readable storage substrate, a random or serial access memory array or device, or a combination of one or more of them. Moreover, while a computer storage medium is not a propagated signal, a computer storage medium can be a source or destination of computer program instructions encoded in an artificially-generated propagated signal. The computer storage medium can also be, or be included in, one or more separate physical components or media (e.g., multiple CDs, disks, or other storage devices).

The operations described herein can be implemented as operations performed by an information/data processing apparatus on information/data stored on one or more computer-readable storage devices or received from other sources.

The term "data processing apparatus" encompasses all kinds of apparatus, devices, and machines for processing data, including by way of example a programmable processor, a computer, a system on a chip, or multiple ones, or combinations, of the foregoing. The apparatus can include special purpose logic circuitry, e.g., an FPGA (field programmable gate array) or an ASIC (application-specific integrated circuit). The apparatus can also include, in addition to hardware, code that creates an execution environment for the computer program in question, e.g., code that constitutes processor firmware, a protocol stack, a repository management system, an operating system, a cross-platform runtime environment, a virtual machine, or a combination of one or more of them. The apparatus and execution environment can realize various different computing model infrastructures, such as web services, distributed computing and grid computing infrastructures.

A computer program (also known as a program, software, software application, script, or code) can be written in any form of programming language, including compiled or interpreted languages, declarative or procedural languages, and it can be deployed in any form, including as a stand-alone program or as a module, component, subroutine, object, or other unit suitable for use in a computing environment. A computer program may, but need not, correspond to a file in a file system. A program can be stored in a portion of a file that holds other programs or information/data (e.g., one or more scripts stored in a markup language document), in a single file dedicated to the program in question, or in multiple coordinated files (e.g., files that store one or more modules, sub-programs, or portions of code). A computer program can be deployed to be executed on one computer or on multiple computers that are located at one site or distributed across multiple sites and interconnected by a communication network.

The processes and logic flows described herein can be performed by one or more programmable processors executing one or more computer programs to perform actions by operating on input information/data and generating output. Processors suitable for the execution of a computer program include, by way of example, both general and special purpose microprocessors, and any one or more processors of any kind of digital computer. Generally, a processor will receive instructions and information/data from a read-only memory or a random access memory or both. The essential elements of a computer are a processor for performing actions in accordance with instructions and one or more memory devices for storing instructions and data. Generally, a computer will also include, or be operatively coupled to receive information/data from or transfer information/data to, or both, one or more mass storage devices for storing data, e.g., magnetic, magneto-optical disks, or optical disks. However, a computer need not have such devices. Devices suitable for storing computer program instructions and information/data include all forms of non-volatile memory, media and memory devices, including by way of example semiconductor memory devices, e.g., EPROM, EEPROM, and flash memory devices; magnetic disks, e.g., internal hard disks or removable disks; magneto-optical disks; and CD-ROM and DVD-ROM disks. The processor and the memory can be supplemented by, or incorporated in, special purpose logic circuitry. In this regard, the processes and logic flows described herein, and/or various combinations and subcombinations of the operations depicted and described, may embody one or more computer-implemented process(es), one or more computer program product(s), and/or one or more specially configured apparatus(es) in accordance with the present disclosure.

To provide for interaction with a user, embodiments of the subject matter described herein can be implemented on a computer having a display device, e.g., a CRT (cathode ray tube) or LCD (liquid crystal display) monitor, for displaying information/data to the user and a keyboard and a pointing device, e.g., a mouse or a trackball, by which the user can provide input to the computer. Other kinds of devices can be used to provide for interaction with a user as well; for example, feedback provided to the user can be any form of sensory feedback, e.g., visual feedback, auditory feedback, or tactile feedback; and input from the user can be received in any form, including acoustic, speech, or tactile input. In addition, a computer can interact with a user by sending documents to and receiving documents from a device that is used by the user; for example, by sending web pages to a web browser on a user's client device in response to requests received from the web browser.

Embodiments of the subject matter described herein can be implemented in a computing system that includes a back-end component, e.g., as an information/data server, or that includes a middleware component, e.g., an application server, or that includes a front-end component, e.g., a client computer having a graphical user interface or a web browser through which a user can interact with an implementation of the subject matter described herein, or any combination of one or more such back-end, middleware, or front-end components. The components of the system can be interconnected by any form or medium of digital information/data communication, e.g., a communication network. Examples of communication networks include a local area network ("LAN") and a wide area network ("WAN"), an inter-network (e.g., the Internet), and peer-to-peer networks (e.g., ad hoc peer-to-peer networks).

The computing system can include clients and servers. A client and server are generally remote from each other and typically interact through a communication network. The relationship of client and server arises by virtue of computer programs running on the respective computers and having a client-server relationship to each other. In some embodiments, a server transmits information/data (e.g., an HTML page) to a client device (e.g., for purposes of displaying information/data to and receiving user input from a user interacting with the client device). Information/data generated at the client device (e.g., a result of the user interaction) can be received from the client device at the server.

While this specification contains many specific implementation details, these should not be construed as limitations on the scope of any disclosures or of what may be claimed, but rather as descriptions of features specific to particular embodiments of particular disclosures. Certain features that are described herein in the context of separate embodiments can also be implemented in combination in a single embodiment. Conversely, various features that are described in the context of a single embodiment can also be implemented in multiple embodiments separately or in any suitable subcombination. Moreover, although features may be described above as acting in certain combinations and even initially claimed as such, one or more features from a claimed combination can in some cases be excised from the combination, and the claimed combination may be directed to a subcombination or variation of a subcombination.

Similarly, while operations are depicted in the drawings in a particular order, this should not be understood as requiring that such operations be performed in the particular order shown or in sequential order, or that all illustrated operations be performed, to achieve desirable results. In certain circumstances, multitasking and parallel processing may be advantageous. Moreover, the separation of various system components in the embodiments described above should not be understood as requiring such separation in all embodiments, and it should be understood that the described program components and systems can generally be integrated together in a single software product or packaged into multiple software products.

Thus, particular embodiments of the subject matter have been described. Other embodiments are within the scope of the following claims. In some cases, the actions recited in the claims can be performed in a different order and still achieve desirable results. In addition, the processes depicted in the accompanying figures do not necessarily require the particular order shown, or sequential order, to achieve desirable results. In certain implementations, multitasking and parallel processing may be advantageous.

## Claims

1. A computer-implemented method comprising:
receiving entity parameter data corresponding to at least one signal handling entity associated with an environment, wherein the at least one signal handling entity supports communication of at least one signal type;
receiving dynamic environment data associated with an impact of a signal strength of the signal type in the environment;
generating a model of signal strength in an environment for the at least one signal type by at least:
modeling a signal propagation for each signal handling entity of the at least one signal handling entity based at least in part on the entity parameter data and the dynamic environment data;
determining the signal strength for the at least one signal type in the environment based at least in part on a combination of the signal propagations for the at least one signal handling entity;
identifying a set of coverage areas within the environment that are associated with different signal strengths based at least in part on the model;
outputting a top-down coverage map of the set of coverage areas at least within proximity of a vehicle; and
outputting a vertical profile coverage map of the set of coverage areas at least within the proximity of the vehicle.

2. The computer-implemented method of claim 1, wherein the model of signal strengths comprises a modeled connectivity signal strength and a modeled position accuracy signal strength.

3. The computer-implemented method of claim 1, further comprising:
receiving an updated proposed travel plan that navigates throughout the environment; and
updating at least one user interface comprising the top-down coverage map and the vertical profile coverage map to depict at least one updated signal strength associated with the vehicle along the updated proposed travel plan.

4. The computer-implemented method of claim 1, further comprising:
receiving at least one signal interface parameter indicating a particular signal type, a provider identifier, or another parameter associated with the signal strengths associated with the set of coverage areas;
determining an updated set of coverage areas based at least in part on the at least one signal interface parameter; and
outputting a coverage map to a display, wherein the coverage map depicts the updated set of coverage areas.

5. The computer-implemented method of claim 1, wherein the model of a first signal type is based at least in part on a first set of type-specific modeling parameters and the model of a second signal type is based at least in part on a second set of type-specific modeling parameters.

6. The computer-implemented method of claim 1, further comprising:
generating a travel plan based at least in part on the set of coverage areas.

7. The computer-implemented method of claim 1, wherein the top-down coverage map and the vertical profile coverage map are outputted to a display of an external vehicle control system associated with the vehicle.

8. The computer-implemented method of claim 1, wherein the entity parameter data comprises one or more from a set of entity location data, entity coverage data, entity system data, environment map data, environment structure data, and obstacle data.

9. The computer-implemented method of claim 1, wherein the top-down coverage map and the vertical profile coverage map are outputted to a display onboard the vehicle.

10. The computer-implemented method of claim 1, wherein the top-down coverage map or the vertical profile coverage map visually distinguishes a dead zone area in the set of coverage areas.

11. The computer-implemented method of claim 1, further comprising:
determining, based at least in part on the set of coverage areas, an optimal network utilized for data communication.

12. The computer-implemented method of claim 11, further comprising:
causing the vehicle to connect to the optimal network.
